# EUROPEAN PATENT SPECIFICATION

(11) **EP 4 238 773 B1**
(45) Date of publication and mention of the grant of the patent: **10.09.2025**
(21) Application number: 21886335.5
(22) Date of filing: 28.10.2021
(51) Int. Cl.: B41J 2/165, B41J 2/17, B01J 2/04, B41J 2/18, B41J 2/20

(54) **LIQUID DROPLET FORMING DEVICE AND FINE PARTICLE MANUFACTURING DEVICE**
VORRICHTUNG ZUR FORMUNG VON FLÜSSIGKEITSTRÖPFCHEN UND VORRICHTUNG ZUR HERSTELLUNG VON FEINPARTIKELN
DISPOSITIF DE FORMATION DE GOUTTELETTES DE LIQUIDE ET DISPOSITIF DE FABRICATION DE PARTICULES FINES

(30) Priority: 30.10.2020 JP 2020183144; 17.05.2021 JP 2021083324
(43) Date of publication of application: 06.09.2023
(73) Proprietor: Ricoh Company, Ltd., Tokyo 143-8555 (JP)
(72) Inventor: OHSHIMA, Hisayoshi, Tokyo 143-8555 (JP); SATO, Yuichi, Tokyo 143-8555 (JP); AOKI, Shinji, Tokyo 143-8555 (JP); SHINOHARA, Satoshi, Tokyo 143-8555 (JP); IWATA, Shuusuke, Tokyo 143-8555 (JP)
(74) Representative: Marks & Clerk LLP
(86) International application number: PCT/JP2021/039860
(87) International publication number: WO 2022/092218

(56) References cited:
- JP-A- 2006 015 637
- JP-A- 2015 027 657
- JP-A- 2015 085 660
- JP-A- 2019 116 054
- JP-A- 2020 081 982
- US-A1- 2017 320 326
- US-A1- 2018 244 049
- US-B1- 10 696 052

## Description

### [Technical Field]

The present invention relates to a liquid droplet-forming device and a fine particle-manufacturing device.

Priority is claimed on Japanese Patent Application No. 2020-183144, filed October 30, 2020 and Japanese Patent Application No. 2021-083324, filed May 17, 2021.

### [Background Art]

Fine particles with a narrow particle size distribution are used in various applications such as toner fine particles for electrophotography and spacer particles for liquid crystal panels. Among these, as a device for manufacturing toner fine particles, a manufacturing device is known that discharges a liquid toner material in the form of liquid droplets and granulates fine particles having a desired particle diameter (for example, Patent Document 1). In the manufacturing device described in Patent Document 1, fine particles having a desired particle size distribution are manufactured by discharging a raw material liquid, which is a material of fine particles, from a nozzle in the form of liquid droplets and removing the solvent from the liquid droplets. Patent Document 2 discloses a liquid discharge apparatus, comprising a liquid discharge head and a cap.
[Patent Document 1]
   Japanese Unexamined Patent Application, First Publication No. 2015-027657
[Patent Document 2]
   US 2017/320326 A1

### [Summary of Invention]

Aspects of the present invention provide a liquid droplet-forming device and a fine particle-manufacturing device, as set out by the appended set of claims.

### [Technical Problem]

Fine particles with a narrow particle size distribution as described above are also used as materials for tablets and capsules as carriers for physiologically active substances such as pharmaceutical compounds.

Fine particles for pharmaceutical use are required to be manufactured in sanitary facilities that satisfy good manufacturing practice (GMP) for pharmaceuticals. Therefore, in the device that manufactures fine particles, it is necessary to effectively wash the device and keep the device in a clean state such that it is possible to suppress the contamination of different chemicals when changing product types and to manufacture fine particles with the particle size distribution as designed.

Meanwhile, in order to manufacture fine particles industrially, it is desired to wash the device efficiently so as not to excessively reduce production efficiency (production amount per unit time).

The manufacturing device described in Patent Document 1 describes a configuration for washing nozzles, but there is room for further improvement in order to keep the device in a state suitable for manufacturing without reducing production efficiency and effectively wash the device.

It should be noted that the above problems are not limited to pharmaceuticals. In the technical field of fine particle-manufacturing, there is a common demand to suppress the contamination of foreign substances and to keep a state suitable for the manufacturing of desired particles.

The present invention has been made in view of such circumstances, and an object thereof is to provide a liquid droplet-forming device capable of efficiently and effectively washing a nozzle, and a fine particle-manufacturing device including the liquid droplet-forming device and capable of manufacturing high-quality fine particles.

### [Solution to Problem]

In order to solve the above problems, according to one aspect of the present invention, a liquid droplet-forming device is provided as set out by appended claim 1.

### [Advantageous Effects of Invention]

According to the present invention, it is possible to provide a liquid droplet-forming device capable of efficiently and effectively washing a nozzle. Further, it is possible to provide a fine particle-manufacturing device including the liquid droplet-forming device and capable of manufacturing high-quality fine particles.

### [Brief Description of Drawings]

FIG. 1 is an explanatory view of a liquid droplet-forming device.
FIG. 2 is an explanatory view showing an example of a configuration of switching means 26.
FIG. 3 is an explanatory view describing an operation of a liquid droplet-forming device 1.
FIG. 4 is an explanatory view describing an operation of the liquid droplet-forming device 1.
FIG. 5 is an explanatory view describing an operation of the liquid droplet-forming device 1.
FIG. 6 is an explanatory view describing an operation of the liquid droplet-forming device 1.
FIG. 7 is an explanatory view describing an operation of the liquid droplet-forming device 1.
FIG. 8 is an explanatory view describing an operation of the liquid droplet-forming device 1.
FIG. 9 is an explanatory view of a liquid droplet-forming device and a fine particle-manufacturing device according to a second embodiment.
FIG. 10 is an explanatory view of the liquid droplet-forming device according to the second embodiment.
FIG. 11 is an explanatory view of the liquid droplet-forming device according to the second embodiment.

### [Description of Embodiments]

### [First Embodiment]

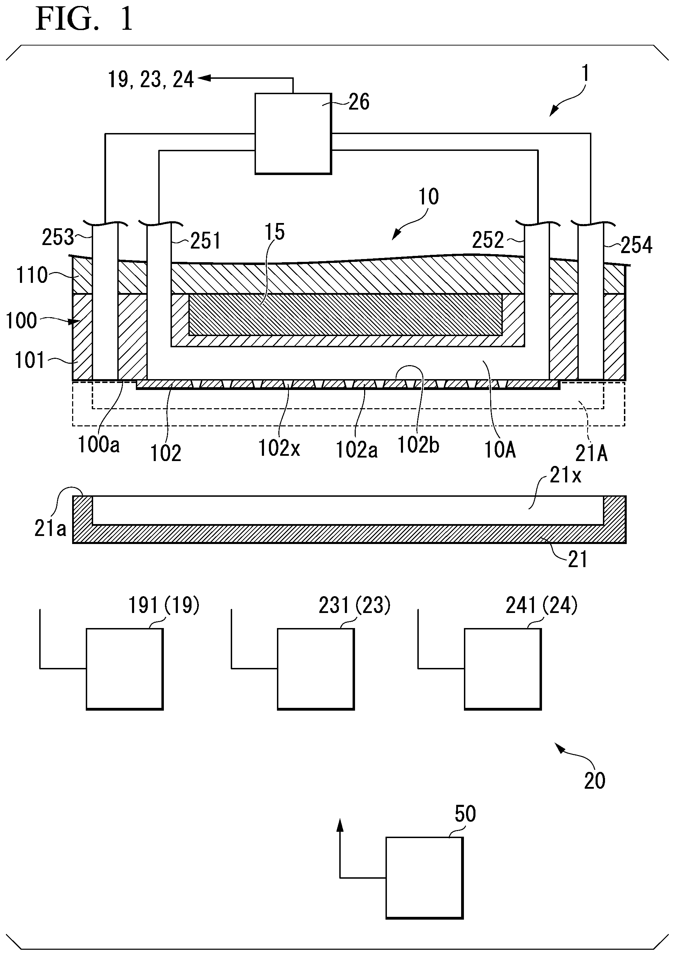

A liquid droplet-forming device according to the first embodiment will be described below with reference to FIGS. 1 to 8. In addition, in all the drawings below, the dimensions and ratios of the components are appropriately changed in order to make the drawings easier to see.

### <<Liquid droplet-forming device>>

The liquid droplet-forming device of the present embodiment includes a discharge unit that discharges liquid droplets of a raw material liquid and a washing unit that washes the discharge unit.

For example, any one of the following (1) to (3), which are well-known configurations as a device for discharging liquid droplets, can be adopted for the discharge unit.
(1) A configuration using "volume-changing means" that changes the volume of a liquid-containing unit using vibration
(2) A configuration using "constriction generation means" that releases liquid from a plurality of discharge holes provided in the liquid-containing unit while applying vibration to the liquid-containing unit, and changes the liquid from a columnar shape to liquid droplets through a constriction state
(3) A configuration using a "nozzle vibration means" that vibrates a thin film in which discharge holes (nozzles) are formed

### <Volume-changing means>

The volume-changing means is not particularly limited as long as the volume-changing means can change the volume of the liquid-containing unit, and can be appropriately selected according to the purpose. Piezoelectric elements that expand and contract when voltage is applied (sometimes called "piezo elements"), electrothermal conversion elements such as heating resistors, and the like are exemplary examples.

### <Constriction generation means>

As constriction generation means, for example, there is means using the technology described in Japanese Unexamined Patent Application, First Publication No. 2007-199463. In Japanese Unexamined Patent Application, First Publication No. 2007-199463, a configuration is considered in which, while applying vibration to the liquid-containing unit by vibration means using a piezoelectric element that is in contact with a part of the liquid-containing unit, the raw material liquid is released from a plurality of nozzles provided in the liquid-containing unit, and the raw material liquid changes from a columnar shape to liquid droplets through a constriction state.

### <Nozzle vibration means>

As nozzle vibration means, for example, there is means using the technology described in Japanese Unexamined Patent Application, First Publication No. 2008-292976. In Japanese Unexamined Patent Application, First Publication No. 2008-292976, a configuration is considered in which a thin film with a plurality of nozzles formed in a liquid-containing unit, a piezoelectric element that vibrates a thin film arranged around deformable region of the thin film. It discharges the raw material liquid from the plurality of nozzles and change the raw material liquid into liquid droplets.

As an example, a liquid droplet-forming device employing a discharge unit having the constriction generation means will be described below with reference to the drawings.

FIG. 1 is an explanatory view of the liquid droplet-forming device. As shown in FIG. 1, a liquid droplet-forming device 1 of the present embodiment includes a discharge unit 10 and a washing unit 20. Further, the liquid droplet-forming device 1 may have a control unit 50 that controls the operation of each unit.

### <Discharge unit>

The discharge unit 10 discharges liquid droplets of a raw material liquid, which will be described later. The discharge unit 10 has a liquid chamber 10A for storing the raw material liquid, and discharge holes (nozzles) 102x communicating with the liquid chamber 10A. The raw material liquid stored in the liquid chamber 10A is discharged through the discharge hole 102x and formed into a spherical shape in the gas phase due to the surface tension of the raw material liquid.

The discharge unit 10 has a discharge head 100 having the liquid chamber 10A and the discharge holes 102x, and a discharge unit main body 110 to which the discharge head 100 is connected. The discharge head 100 may be configured to be attachable to and detachable from the discharge unit main body 110.

The discharge head 100 is not particularly limited as long as the liquid chamber 10A is provided, and the shape, size, and the like can be appropriately selected according to the purpose.

The discharge head 100 has a head main body 101 provided with the liquid chamber 10A, and a nozzle plate 102 that forms a part of the wall surface of the liquid chamber 10A.

The nozzle plate 102 has the plurality of discharge holes 102x. The cross-sectional shape and size of the discharge holes 102x can be appropriately selected.

The cross-sectional shape of the discharge hole 102x is not particularly limited, and can be appropriately selected according to the purpose.
(1): A tapered shape in which the opening diameter decreases from the inside (liquid chamber side) to the outside (liquid discharge side)
(2): A shape in which the opening diameter narrows while having a round shape from the inside (liquid chamber side) to the outside (liquid discharge side)
(3): A shape in which the opening diameter narrows while having a constant nozzle angle from the inside (liquid chamber side) to the outside (liquid discharge side)
(4): A combination of shape (1) and shape (2)
are exemplary examples. Among these, shape (3) is preferable because the pressure applied to the liquid in the discharge hole 102x is maximized.

The nozzle angle in shape (3) is not particularly limited and can be appropriately selected according to the purpose, but is preferably 60° or more and 90° or less. When the nozzle angle is 60° or more, it is easy to apply pressure to the liquid, and it becomes easy to perform processing. When the nozzle angle is 90° or less, pressure is applied to the discharge holes, and thus liquid droplet discharge can be stabilized. Therefore, it is preferable that the maximum nozzle angle be 90°.

The size of the discharge hole 102x is not particularly limited, and can be appropriately selected according to the purpose. For example, the diameter of the discharge hole 102x is preferably 5 µm or more and 100 µm or less.

The discharge head 100 is preferably configured to be disassemblable into the head main body 101 and the nozzle plate 102. In the discharge head 100 having such a configuration, the liquid chamber 10A can be kept clean by washing after disassembling as necessary.

The discharge head 100 has a vibration unit 15 that applies vibration to the raw material liquid stored in the liquid chamber 10A. A piezoelectric element is generally used as the vibration unit 15. The piezoelectric element is not particularly limited, and the shape, size, and material can be appropriately selected. For example, piezoelectric elements used in conventional ink jet discharge systems can be suitably used.

The shape and size of the piezoelectric element are not particularly limited, and can be appropriately selected according to the shape or the like of the discharge hole.

The material of the piezoelectric element is not particularly limited and can be appropriately selected according to the purpose. Piezoelectric ceramics such as lead zirconate titanate (PZT), piezoelectric polymers such as polyvinylidene fluoride (PVDF), crystals, and single crystals such as LiNbO₃, LiTaO₃, KNbO₃, and the like are exemplary examples.

The discharge head 100 can change the raw material liquid into liquid droplets by discharging the raw material liquid from the liquid chamber 10A through the discharge holes 102x while applying vibration to the raw material liquid in the liquid chamber 10A with the vibration unit 15.

Furthermore, the discharge unit 10 has a raw material liquid supply unit 19 that performs supply to the discharge head 100. The raw material liquid supply unit 19 has a raw material liquid tank 191 that stores the raw material liquid. The means for supplying the raw material liquid from the raw material liquid tank 191 to the liquid chamber 10A may be a pump provided in the piping route, and may be pressurizing means for increasing the internal pressure of the raw material liquid tank 191 in order to pump the raw material liquid.

### - Raw material liquid -

The raw material liquid contains a base material and, if necessary, a solvent and other ingredients.

### -- Base material --

The base material is a material that serves as a base for composing particles. Therefore, it is preferable that the base material be solid at room temperature. The base material is not particularly limited as long as the base material does not adversely affect the physiologically active substance contained together, and may be a substance with low molecular weight or a substance with high molecular weight. However, since particles of the present invention are preferably particles that are applied to living organisms, the base material is preferably a substance that is non-toxic to living organisms. It is preferable that the substance with low molecular weight be a compound with a weight average molecular weight of less than 15,000. It is preferable that the substance with high molecular weight be a compound having a weight average molecular weight of 15,000 or more. As described above, the number of base materials may be one or more, and any base material described later may be used in combination.

### - Substance with low molecular weight -

The substance with low molecular weight is not particularly limited and can be appropriately selected according to the purpose. Lipids, sugars, cyclodextrins, amino acids, organic acids, and the like are exemplary examples. One type of these may be used alone, or two or more types thereof may be used together.

### -- Lipids --

Lipids are not particularly limited and can be appropriately selected according to the purpose. Medium or long chain monoglycerides, medium or long chain diglycerides, medium or long chain triglycerides, phospholipids, vegetable oils (for example, soybean oil, avocado oil, squalene oil, sesame oil, olive oil, corn oil, rapeseed oil, safflower oil, and sunflower oil), fish oil, seasoning oil, water-insoluble vitamins, fatty acids, mixtures thereof, derivatives thereof, and the like are exemplary examples. One type of these lipids may be used alone, or two or more types thereof may be used together.

### -- Sugars --

Sugars are not particularly limited and can be appropriately selected according to the purpose. In addition to monosaccharides and polysaccharides such as glucose, mannose, idose, galactose, fucose, ribose, xylose, lactose, sucrose, maltose, trehalose, turanose, raffinose, maltotriose, acarbose, cyclodextrins, amylose (starch), and cellulose; sugar alcohols (polyols) such as glycerin, sorbitol, lactitol, maltitol, mannitol, xylitol, and erythritol; derivatives thereof, and the like are exemplary examples. One type of these sugars may be used alone, or two or more types thereof may be used together.

### -- Cyclodextrins --

Cyclodextrins are not particularly limited and can be appropriately selected according to the purpose. Hydroxypropyl-β-cyclodextrin, β-cyclodextrin, γ- cyclodextrin, α-cyclodextrin, cyclodextrin derivatives, and the like are exemplary examples. One type of these cyclodextrins may be used alone, or two or more types thereof may be used together.

### -- Amino acids --

Amino acids are not particularly limited and can be appropriately selected according to the purpose. Valine, lysine, leucine, threonine, isoleucine, asparagine, glutamine, phenylalanine, aspartic acid, serine, glutamic acid, methionine, arginine, glycine, alanine, tyrosine, proline, histidine, cysteine, tryptophan, derivatives thereof, and the like are exemplary examples. One type of these amino acids may be used alone, or two or more types thereof may be used together.

### -- Organic acids --

Organic acids are not particularly limited and can be appropriately selected according to the purpose. Adipic acid, ascorbic acid, citric acid, fumaric acid, gallic acid, glutaric acid, lactic acid, malic acid, maleic acid, succinic acid, tartaric acid, derivatives thereof, and the like are exemplary examples. One type of these organic acids may be used alone, or two or more types thereof may be used together.

### - Substance with high molecular weight -

Substances with high molecular weight are not particularly limited and can be appropriately selected according to the purpose. Proteins such as water-soluble cellulose, polyalkylene glycol, poly(meth)acrylamide, poly(meth)acrylic acid, poly(meth)acrylic acid ester, polyallylamine, polyvinylpyrrolidone, polyvinyl alcohol, polyvinyl acetate, biodegradable polyester, polyglycolic acid, polyamino acid, gelatin, and fibrin, polysaccharides, derivatives thereof, and the like are exemplary examples. One type of these substances with high molecular weight may be used alone, or two or more types thereof may be used together.

### -- Water-soluble cellulose --

Water-soluble cellulose is not particularly limited and can be appropriately selected according to the purpose. Alkylcellulose such as methyl cellulose and ethyl cellulose; hydroxyalkyl cellulose such as hydroxyethyl cellulose and hydroxypropyl cellulose; hydroxyalkyl alkyl cellulose such as hydroxyethyl methyl cellulose and hydroxypropyl methyl cellulose, and the like are exemplary examples. One type of these water-soluble celluloses may be used alone, or two or more types thereof may be used together. Among these water-soluble celluloses, hydroxypropyl cellulose and hydroxypropyl methyl cellulose are preferable, and hydroxypropyl cellulose is more preferable, from the viewpoint of high biocompatibility and high solubility in the solvent used for manufacturing particles.

### --- Hydroxypropyl cellulose ---

Various hydroxypropyl cellulose products with different viscosities are commercially available from various companies, and any of them can be used for the base material of the present invention. The viscosity of a 2% by mass aqueous solution (20°C) of hydroxypropyl cellulose is not particularly limited and can be appropriately selected according to the purpose, but a viscosity of 2.0 mPa·s (centipoise, cps) or more and 4,000 mPa·s (centipoise, cps) or less is preferable.

In addition, the viscosity of hydroxypropyl cellulose is considered to depend on the weight average molecular weight, substitution degree, and molecular weight of hydroxypropyl cellulose. The weight average molecular weight of hydroxypropyl cellulose is not particularly limited and can be appropriately selected according to the purpose, but a weight average molecular weight of 15,000 or more and 400,000 or less is preferable. In addition, the weight average molecular weight can be measured using gel permeation chromatography (GPC), for example.

Commercially available products of hydroxypropyl cellulose are not particularly limited and can be appropriately selected according to the purpose. HPC-SSL with a molecular weight of 15,000 or more and 30,000 or less and a viscosity of 2.0 mPa·s or more and 2.9 mPa·s or less, HPC-SL with a molecular weight of 30,000 or more and 50,000 or less and a viscosity of 3.0 mPa·s or more and 5.9 mPa·s or less, HPC-L with a molecular weight of 55,000 or more and 70,000 or less and a viscosity of 6.0 mPa·s or more and 10.0 mPa·s or less, HPC-M with a molecular weight of 110,000 or more and 150,000 or less and a viscosity of 150 mPa·s or more and 400 mPa·s or less, HPC-H with a molecular weight of 250,000 or more and 400,000 or less and a viscosity of 1,000 mPa·s or more and 4,000 mPa·s or less, and the like (manufactured by Nippon Soda Co., Ltd.) are exemplary examples. One type of these hydroxypropyl celluloses may be used alone, or two or more types thereof may be used together. Among these hydroxypropyl celluloses, HPC-SSL with a molecular weight of 15,000 or more and 30,000 or less and a viscosity of 2.0 mPa·s or more and 2.9 mPa·s or less is preferable. In addition, in the above commercially available products, the molecular weight is measured using gel permeation chromatography (GPC), and the viscosity is measured using a 2% by mass aqueous solution (20°C).

The content of hydroxypropyl cellulose is not particularly limited, and can be appropriately selected according to the purpose. With respect to the mass of the base material, a content of 50% by mass or more is preferable, a content of 50% by mass or more and 99% by mass or less is more preferable, a content of 75% by mass or more and 99% by mass or less is still more preferable, and a content of 80% by mass or more and 99% by mass or less is particularly preferable.

### -- Polyalkylene glycol --

Polyalkylene glycol is not particularly limited and can be appropriately selected according to the purpose. Polyethylene glycol (PEG), polypropylene glycol, polybutylene glycol, copolymers thereof, and the like are exemplary examples. One type of these polyalkylene glycols may be used alone, or two or more types thereof may be used together.

### -- Poly(meth)acrylamide --

Poly(meth)acrylamide is not particularly limited and can be appropriately selected according to the purpose. Polymers of monomers such as N-methyl(meth)acrylamide, N-ethyl(meth)acrylamide, N-propyl(meth)acrylamide, N-butyl(meth)acrylamide, N-benzyl(meth)acrylamide, N-hydroxyethyl(meth)acrylamide, N-phenyl(meth)acrylamide, N-tolyl(meth)acrylamide, N-(hydroxyphenyl)(meth) acrylamide, N-(sulfamoylphenyl)(meth)acrylamide, N-(phenylsulfonyl)(meth)acrylamide, N-(tolylsulfonyl)(meth)acrylamide, N,N-dimethyl(meth)acrylamide, N-methyl-N-phenyl(meth)acrylamide, and N-hydroxyethyl-N-methyl(meth)acrylamide are exemplary examples. One type of these monomers may be polymerized alone, or two or more types thereof may be polymerized together. **In** addition, one type of these polymers may be used alone, or two or more types thereof may be used together.

### -- Poly(meth)acrylic acid --

Poly(meth)acrylic acid is not particularly limited and can be appropriately selected according to the purpose. Homopolymers such as polyacrylic acid and polymethacrylic acid, copolymers such as acrylic acid-methacrylic acid copolymer, and the like are exemplary examples. One type of these poly(meth)acrylic acids may be used alone, or two or more types thereof may be used together.

### -- Poly(meth)acrylic acid ester --

The poly(meth)acrylic acid ester is not particularly limited and can be appropriately selected according to the purpose. Polymers of monomers such as ethylene glycol di(meth)acrylate, diethylene glycol di(meth)acrylate, propylene glycol di(meth)acrylate, glycerol poly(meth)acrylate, polyethylene glycol(meth)acrylate, trimethylolpropane tri(meth)acrylate, pentaerythritol tetra(meth)acrylate, and 1,3-butylene glycol di(meth)acrylate are exemplary examples. One type of these monomers may be polymerized alone, or two or more types thereof may be polymerized together. In addition, one type of these polymers may be used alone, or two or more types thereof may be used together.

### -- Polyallylamine --

Polyallylamine is not particularly limited and can be appropriately selected according to the purpose. Diallylamine and triallylamine are exemplary examples. One type of these polyallylamines may be used alone, or two or more types thereof may be used together.

### -- Polyvinylpyrrolidone --

Commercially available products can be used as polyvinylpyrrolidone. Commercially available products of polyvinylpyrrolidone are not particularly limited and can be appropriately selected according to the purpose. Plasdone C-15 (manufactured by ISP TECHNOLOGIES); Kollidon VA64, Kollidon K-30, and Kollidon CL-M (manufactured by KAWARLAL); Kollicoat IR (manufactured by BASF), and the like are exemplary examples. One type of these polyvinylpyrrolidones may be used alone, or two or more types thereof may be used together.

### -- Polyvinyl alcohol --

The polyvinyl alcohol is not particularly limited and can be appropriately selected according to the purpose. Silanol-modified polyvinyl alcohol, carboxyl-modified polyvinyl alcohol, acetoacetyl-modified polyvinyl alcohol and the like are exemplary examples. One type of these polyvinyl alcohols may be used alone, or two or more types thereof may be used together.

### -- Polyvinyl acetate --

Polyvinyl acetate is not particularly limited and can be appropriately selected according to the purpose. Vinyl acetate-crotonic acid copolymer, vinyl acetate-itaconic acid copolymer and the like are exemplary examples. One type of these polyvinyl acetates may be used alone, or two or more types thereof may be used together.

### -- Biodegradable polyester --

Biodegradable polyester is not particularly limited and can be appropriately selected according to the purpose. Polylactic acid; poly-ε-caprolactone; succinate polymers such as polyethylene succinate, polybutylene succinate, and polybutylene succinate adipate; polyhydroxyalkanoates such as polyhydroxypropionate, polyhydroxybutyrate, and polyhydroxyparylate; polyglycolic acid, and the like are exemplary examples. One type of these biodegradable polyesters may be used alone, or two or more types thereof may be used together. Among these, polylactic acid is preferable from the viewpoint of high biocompatibility and ability to elute the contained physiologically active substance in a controlled release manner.

### --- Polylactic acid ---

The weight average molecular weight of polylactic acid is not particularly limited and can be appropriately selected according to the purpose. A weight average molecular weight of 5,000 or more and 100,000 or less is preferable, a weight average molecular weight of 10,000 or more and 70,000 or less is more preferable, a weight average molecular weight of 10,000 or more and 50,000 or less is still more preferable, a weight average molecular weight of 10,000 or more and 30,000 or less is particularly preferable.

The content of polylactic acid is not particularly limited, and can be appropriately selected according to the purpose. With respect to the mass of the base material, a content of 50% by mass or more is preferable, a content of 50% by mass or more and 99% by mass or less is more preferable, a content of 75% by mass or more and 99% by mass or less is still more preferable, and a content of 80% by mass or more and 99% by mass or less is particularly preferable.

### --- Polyglycolic acid ---

Polyglycolic acid is not particularly limited and can be appropriately selected according to the purpose. A lactic acid/glycolic acid copolymer, which is a copolymer having structural units derived from lactic acid and structural units derived from glycolic acid, a glycolic acid/caprolactone copolymer, which is a copolymer having structural units derived from glycolic acid and structural units derived from caprolactone, a glycolic acid/trimethylene carbonate copolymer, which is a copolymer having structural units derived from glycolic acid and structural units derived from trimethylene carbonate, and the like are exemplary examples. One type of these polyglycolic acids may be used alone, or two or more types thereof may be used together. Among these, lactic acid/glycolic acid copolymer is preferable from the viewpoint of high biocompatibility, ability to elute the contained physiologically active substance in a controlled release manner, and long-term preservation of contained physiologically active substances.

The weight average molecular weight of the lactic acid/glycolic acid copolymer is not particularly limited and can be appropriately selected according to the purpose. A weight average molecular weight of 2,000 to 250,000 is preferable, a weight average molecular weight of 2,000 to 100,000 is more preferable, a weight average molecular weight of 3,000 to 50,000 is still more preferable, and a weight average molecular weight of 5,000 to 10,000 is particularly preferable.

In the lactic acid/glycolic acid copolymer, the molar ratio (L:G) between the structural unit (L) derived from lactic acid and the structural unit (G) derived from glycolic acid is not particularly limited, and can be appropriately selected according to the purpose. A molar ratio of 1:99 to 99:1 is preferable, a molar ratio of 25:75 to 99:1 is more preferable, a molar ratio of 30:70 to 90:10 is still more preferable, and a molar ratio of 50:50 to 85:15 is particularly preferable.

The content of lactic acid/glycolic acid copolymer is not particularly limited, and can be appropriately selected according to the purpose. With respect to the mass of the base material, a content of 50% by mass or more is preferable, a content of 50% by mass or more and 99% by mass or less is more preferable, a content of 75% by mass or more and 99% by mass or less is still more preferable, and a content of 80% by mass or more and 99% by mass or less is particularly preferable.

### -- Polyamino acid --

Polyamino acid is not particularly limited, and can be appropriately selected according to the purpose. The polyamino acid may be a polymer polymerized by combining the amino acids exemplified in the amino acid section above in any manner, but is preferably a polymer obtained by polymerizing a single amino acid. Preferable polyamino acids include, for example, amino acid homopolymers such as poly-α-glutamic acid, poly-γ-glutamic acid, polyaspartic acid, polylysine, polyarginine, polyornithine, and polyserine, copolymers thereof, and the like are exemplary examples. One type of these polyamino acids may be used alone, or two or more types thereof may be used together.

### -- Gelatin --

Gelatin is not particularly limited and can be appropriately selected according to the purpose. Lime-processed gelatin, acid-processed gelatin, gelatin hydrolyzate, gelatin enzyme dispersion, derivatives thereof, and the like are exemplary examples. One type of these gelatins may be used alone, or two or more types thereof may be used together.

The natural dispersant polymer used in the gelatin derivative is not particularly limited and can be appropriately selected according to the purpose. Proteins, polysaccharides, nucleic acids and the like are exemplary examples. These include natural dispersant polymers or copolymers composed of synthetic dispersant polymers. One type of these natural dispersant polymers may be used alone, or two or more types thereof may be used together.

A gelatin derivative means a gelatin derivatized by covalently bonding a hydrophobic group to a gelatin molecule. The hydrophobic group is not particularly limited and can be appropriately selected according to the purpose. Polyesters such as polylactic acid, polyglycolic acid, and poly-ε-caprolactone; lipids such as cholesterol and phosphatidylethanolamine; aromatic groups containing alkyl groups and benzene rings; heteroaromatic groups, mixtures thereof, and the like are exemplary examples.

The protein is not particularly limited as long as the protein does not adversely affect the physiological activity of the physiologically active substance, and can be appropriately selected according to the purpose. Collagen, fibrin, albumin, and the like are exemplary examples. One type of these may be used alone, or two or more types thereof may be used together.

Polysaccharides are not particularly limited and can be appropriately selected according to the purpose. Chitin, chitosan, hyaluronic acid, alginic acid, starch, pectin and the like are exemplary examples. One type of these polysaccharides may be used alone, or two or more types thereof may be used together.

The base material is preferably a substance that allows the particles containing the base material to be contained in pharmaceutical preparations, functional foods, functional cosmetics, and the like. Among the materials, non-biotoxic substances, especially biodegradable substances such as biodegradable polymers are preferable.

### -- Solvent --

The solvent is not particularly limited and can be appropriately selected according to the purpose, but a solvent capable of dissolving or dispersing the poorly water-soluble compound or pharmaceutically acceptable salt thereof is preferable.

As solvents, aliphatic halogenated hydrocarbons (for example, dichloromethane, dichloroethane, and chloroform), alcohols (for example, methanol, ethanol, and propanol), ketones (for example, acetone and methyl ethyl ketone), ethers (for example, diethyl ether, dibutyl ether, and 1,4-dioxane), aliphatic hydrocarbons (for example, n-hexane, cyclohexane, and n-heptane), aromatic hydrocarbons (for example, benzene, toluene, and xylene), organic acids (for example, acetic acid and propionic acid), esters (for example, ethyl acetate), amides (for example, dimethylformamide and dimethylacetamide), and the like are exemplary examples. One type of these may be used alone, or two or more types thereof may be used together. Among these, aliphatic halogenated hydrocarbons, alcohols, ketones, or mixed solvents thereof are preferable, and dichloromethane, 1,4-dioxane, methanol, ethanol, acetone, or mixed solvents thereof are more preferable, from the viewpoint of solubility.

The content of the solvent is preferably 70% by mass or more and 99.5% by mass or less, more preferably 90% by mass or more and 99% by mass or less, with respect to the total amount of the raw material liquid. A case where the content of the solvent is 70% by mass or more and 99.5% by mass or less is advantageous in terms of production stability from the viewpoint of solubility and solution viscosity of the material.

### -- Other ingredients --

Other ingredients are not particularly limited, and can be appropriately selected according to the purpose.

As other ingredients, water, excipients, corrigents, disintegrating agents, fluidizing agents, adsorbents, lubricants, flavoring agents, surfactants, fragrances, coloring agents, antioxidants, masking agents, antistatic agents, wetting agents, and the like are exemplary examples. One type of these ingredients may be used alone, or two or more types thereof may be used together.

The excipient is not particularly limited and can be appropriately selected according to the purpose. Lactose, sucrose, mannitol, glucose, fructose, maltose, erythritol, maltitol, xylitol, palatinose, trehalose, sorbitol, crystalline cellulose, talc, anhydrous silicic acid, anhydrous calcium phosphate, precipitated calcium carbonate, calcium silicate, and the like are exemplary examples. One type of these excipients may be used alone, or two or more types thereof may be used together.

The corrigent is not particularly limited and can be appropriately selected according to the purpose. L-menthol, sucrose, D-sorbitol, xylitol, citric acid, ascorbic acid, tartaric acid, malic acid, aspartame, acesulfame potassium, thaumatin, sodium saccharin, dipotassium glycyrrhizinate, monosodium glutaminate, sodium 5'-inosinate, sodium 5'-guanylate, and the like are exemplary examples. One type of these corrigents may be used alone, or two or more types thereof may be used together.

The disintegrating agent is not particularly limited and can be appropriately selected according to the purpose. Low-substituted hydroxypropyl cellulose, carmellose, carmellose calcium, carboxymethyl starch sodium, croscarmellose sodium, crospovidone, hydroxypropyl starch, corn starch, and the like are exemplary examples. One type of these disintegrating agents may be used alone, or two or more types thereof may be used together.

The fluidizing agent is not particularly limited and can be appropriately selected according to the purpose. Light anhydrous silicic acid, hydrous silicon dioxide, talc, and the like are exemplary examples. One type of these fluidizing agents may be used alone, or two or more types thereof may be used together.

A commercially available product can be used as the light anhydrous silicic acid. Commercially available products of light anhydrous silicic acid are not particularly limited and can be appropriately selected according to the purpose. Adsolider 101 (manufactured by Freund Corporation: average pore diameter: 21 nm) and the like are exemplary examples.

A commercially available product can be used as the adsorbent. Commercially available adsorbents are not particularly limited and can be appropriately selected according to the purpose. Product name: Carplex (ingredient name: synthetic silica, registered trademark of DSL Japan Co., Ltd.), product name: Aerosil (registered trademark of Japan Aerosil Co., Ltd.) 200 (ingredient name: hydrophilic fumed silica), product name: Silysia (ingredient name: amorphous silicon dioxide, registered trademark of Fuji Silysia Chemical Ltd.), product name: Alkamac (ingredient name: synthetic hydrotalcite, registered trademark of Kyowa Kagaku Kogyo Co., Ltd.), and the like are exemplary examples. One type of these adsorbents may be used alone, or two or more types thereof may be used together.

The lubricant is not particularly limited and can be appropriately selected according to the purpose. Magnesium stearate, calcium stearate, sucrose fatty acid ester, sodium stearyl fumarate, stearic acid, polyethylene glycol, talc, and the like are exemplary examples. One type of these lubricants may be used alone, or two or more types thereof may be used together.

The flavoring agent is not particularly limited and can be appropriately selected according to the purpose. Trehalose, malic acid, maltose, potassium gluconate, anise essential oil, vanilla essential oil, cardamom essential oil, and the like are exemplary examples. One type of these flavoring agents may be used alone, or two or more types thereof may be used together.

The surfactant is not particularly limited and can be appropriately selected according to the purpose. Polysorbate such as polysorbate 80; polyoxyethylene/polyoxypropylene copolymer; sodium lauryl sulfate, and the like are exemplary examples. One type of these surfactants may be used alone, or two or more types thereof may be used together.

The fragrance is not particularly limited and can be appropriately selected according to the purpose. Lemon oil, orange oil, peppermint oil, and the like are exemplary examples. One type of these fragrances may be used alone, or two or more types thereof may be used together.

The coloring agent is not particularly limited and can be appropriately selected according to the purpose. Titanium oxide, food yellow No. 5, food blue No. 2, ferric oxide, yellow ferric oxide, and the like are exemplary examples. One type of these coloring agents may be used alone, or two or more types thereof may be used together.

The antioxidant is not particularly limited and can be appropriately selected according to the purpose. Sodium ascorbate, L-cysteine, sodium sulfite, vitamin E, and the like are exemplary examples. One type of these antioxidants may be used alone, or two or more types thereof may be used together.

The masking agent is not particularly limited and can be appropriately selected according to the purpose. Titanium oxide and the like are exemplary examples. One type of these masking agents may be used alone, or two or more types thereof may be used together.

The antistatic agent is not particularly limited and can be appropriately selected according to the purpose. Talc, titanium oxide and the like are exemplary examples. One type of these antistatic agents may be used alone, or two or more types thereof may be used together.

The wetting agent is not particularly limited and can be appropriately selected according to the purpose. Polysorbate 80, sodium lauryl sulfate, sucrose fatty acid ester, macrogol, hydroxypropyl cellulose (HPC), and the like are exemplary examples. One type of these wetting agents may be used alone, or two or more types thereof may be used together.

As the raw material liquid, a solution in which a physiologically active substance is dissolved in a solvent, or a dispersion in which a physiologically active substance is dispersed in a dispersion medium can be used. Further, the raw material liquid may not contain a solvent as long as the raw material liquid is liquid under the discharge conditions, and may be a liquid in which the solid content contained in the raw material liquid is melted.

### <Washing unit>

The washing unit 20 has sealed space-forming means 21 and a flow unit 22.

The sealed space-forming means 21 can liquid-tightly form a sealed space 21A outside the discharge unit 10. The sealed space 21A communicates with the liquid chamber 10A through the discharge holes 102x. Specifically, the sealed space-forming means 21 has a recess portion 21x on the side facing the discharge head 100, and is in liquid-tight contact with a lower surface 100a of the discharge head 100 at an upper end portion 21a of the side wall surrounding the recess portion 21x. A space surrounded by the recess portion 21x and the lower surface 100a is the sealed space 21A. "Sealed" of the sealed space 21A is an expression indicating that the upper end portion 21a and the lower surface 100a are in liquid-tight contact with each other such that there is no liquid leakage from the contact part.

The sealed space-forming means 21 may have an O-ring or packing (not shown) at the upper end portion 21a.

The sealed space-forming means 21 is configured to be attachable to and detachable from the lower surface 100a.

The flow unit 22 causes the washing liquid to flow through the liquid chamber 10A and the sealed space 21A, and washes the outer wall of the liquid chamber 10A and the inner wall of the liquid chamber 10A.

A polar organic solvent can be used as the washing liquid, and alcohols such as methanol and ethanol, and ketones such as acetone and methyl ethyl ketone can be suitably used. As the washing liquid, the same type of liquid as the solvent described above can be used as the solvent that can be contained in the raw material liquid.

The flow unit 22 includes a washing liquid supply unit 23, a waste liquid ejection unit 24, a first flow path 251, a second flow path 252, a third flow path 253, a fourth flow path 254, and switching means 26. Two flow paths obtained by combining one flow path out of the first flow path 251 and the second flow path 252 and one flow path out of the third flow path 253 and the fourth flow path 254, or two flow paths obtained by the third flow path 253 and the fourth flow path 254, correspond to "at least two flow paths" in the present invention. The first flow path 251, the second flow path 252, the third flow path 253, and the fourth flow path 254 are composed of through-holes formed in the discharge head 100 and pipes connected to the discharge head 100.

The washing liquid supply unit 23 supplies washing liquid to the liquid chamber 10A and the sealed space 21A. The washing liquid supply unit 23 includes a washing liquid tank 231 that stores the washing liquid. The means for supplying the washing liquid from the washing liquid tank 231 to the liquid chamber 10A and the sealed space 21A may be a pump provided in the piping route, and may be pressurizing means for increasing the internal pressure of the washing liquid tank 231 in order to pump the washing liquid.

The waste liquid ejection unit 24 ejects the waste liquid generated by washing the liquid chamber 10A and the sealed space 21A. The waste liquid ejection unit 24 includes a waste liquid tank 241 that stores the waste liquid. The means for ejecting the waste liquid from the liquid chamber 10A and the sealed space 21A to the waste liquid tank 241 may be a pump provided in the piping route, or may be pressurizing means provided in the washing liquid supply unit 23.

The first flow path 251 and the second flow path 252 are connected to the liquid chamber 10A. The first flow path 251 and the second flow path 252 are connected to the washing liquid supply unit 23 and the waste liquid ejection unit 24 via the switching means 26, respectively.

The third flow path 253 and the fourth flow path 254 are provided at positions that can be connected to the sealed space 21A when the sealed space 21A is formed by the sealed space-forming means 21. The third flow path 253 and the fourth flow path 254 are connected to the washing liquid supply unit 23 and the waste liquid ejection unit 24 via the switching means 26, respectively.

The switching means 26 is connected to the raw material liquid supply unit 19, the washing liquid supply unit 23, and the waste liquid ejection unit 24, and switches the flow directions of the raw material liquid, the washing liquid, and the waste liquid.

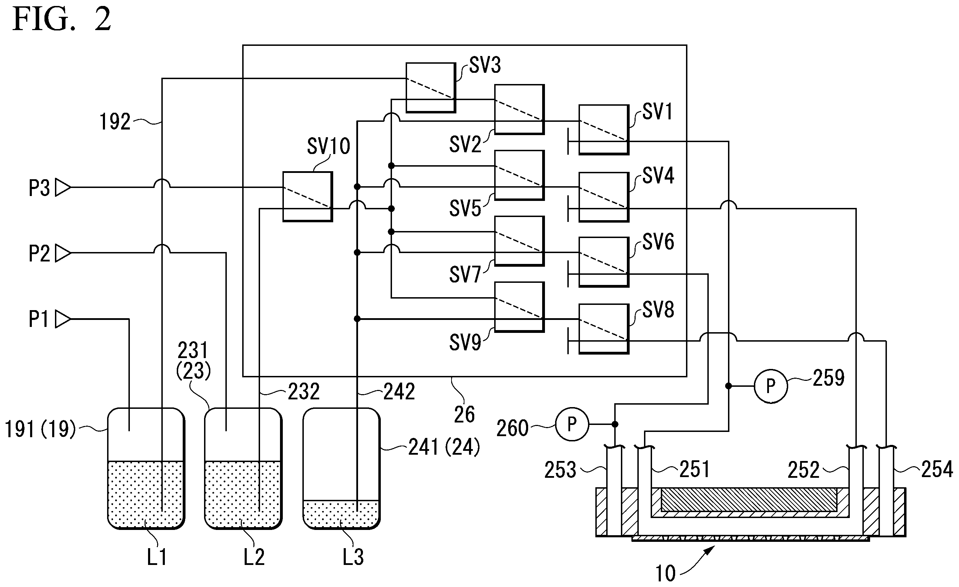

FIG. 2 is an explanatory view showing an example of a configuration of the switching means 26. As shown in FIG. 2, the switching means 26 has switching valves SV1 to SV10. In each switching valve, the route for ON control is indicated by a broken line, and the route for OFF control is indicated by a solid line.

Further, in the switching valves SV1, SV4, SV6 and SV8, the pipe is closed during the OFF control. As a result, the first flow path 251, the second flow path 252, the third flow path 253, and the fourth flow path 254 can be closed by turning off each switching valve.

Reference numerals P1, P2, and P3 shown in FIG. 2 denote pressurizing means for causing pressurized gas to flow in the tank and pipe. Pressure is applied to the first flow path 251, the second flow path 252, the third flow path 253, the fourth flow path 254, and the discharge holes by the pressurizing means. The pressure applied to each flow path and discharge hole can be measured by a pressure-measuring instrument 259 installed in the first flow path 251. It is preferable to install the pressure-measuring instrument 259 as close to the discharge hole as possible in the first flow path. Further, a pressure-measuring instrument 260 may be installed in the third flow path 253 to measure the pressure in the sealed space 21A.

In the switching means 26 shown in FIG. 2, for example, when the raw material liquid L1 is supplied from the raw material liquid tank 191 to the first flow path 251 and liquid droplets are discharged from the discharge holes, it can be seen that the switching valves SV1, SV2, and SV3 may be turned on, all the remaining switching valves may be turned off, and the raw material liquid tank 191 may be pressurized from the pressurizing means P1.

In addition, by appropriately switching the switching valve, it is possible to appropriately switch the flow paths through which the raw material liquid L1, the washing liquid L2, and the waste liquid L3 flow.

In addition, the washing liquid tank 231 that stores the washing liquid L2 and the raw material liquid tank 191 that stores the raw material liquid L1 are switchably connected to the first flow path 251. As a result, the number of pipes can be reduced and the device configuration can be simplified.

### <Control unit>

The control unit 50 shown in FIG. 1 controls the operation of each component of the discharge unit 10 and the washing unit 20. The control unit 50 may be a dedicated terminal included in the liquid droplet-forming device 1, or may be a general-purpose external PC.

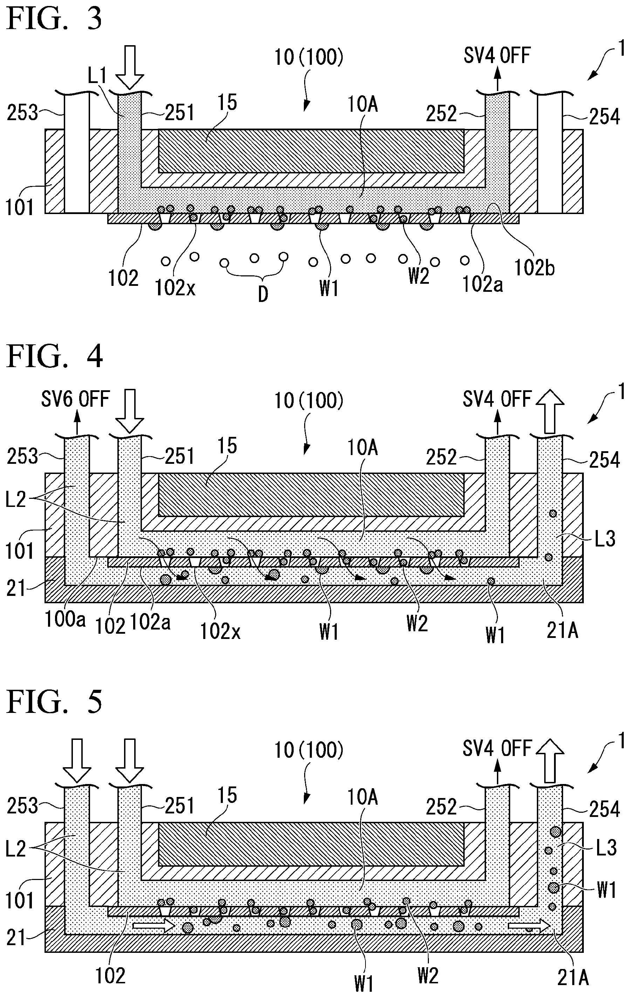

FIGS. 3 to 8 are explanatory views describing an operation of the liquid droplet-forming device 1. In the liquid droplet-forming device 1, liquid droplets can be formed by discharging the raw material liquid, and contaminants on the discharge unit 10 derived from the raw material liquid can be easily washed without disassembly.

In the following description of the operation, the flow of the liquid will be described while appropriately showing the control state of the switching valve included in the switching means 26 shown in FIG. 2. The operation of each unit described below is based on the control signal supplied from the control unit 50.

As shown in FIG. 3, in the liquid droplet-forming device 1, in a state where the switching valve SV4 is turned off to close the second flow path 252, and the switching valves SV1, SV2, and SV3 are turned on, the raw material liquid L1 is supplied from the raw material liquid supply unit 19 to the first flow path 251. As a result, the raw material liquid L1 is supplied to the liquid chamber 10A of the discharge head 100 and discharged from the discharge holes 102x.

At this time, by supplying the raw material liquid L1 while generating vibration in the vibration unit 15, the raw material liquid L1 discharged from the discharge holes 102x is discharged in the form of liquid droplets D.

When the discharge of the liquid droplets D as described above is repeated, a part of the solid content contained in the raw material liquid L1 may precipitate, and the contaminants W1 and W2 may adhere on the outer wall of the liquid chamber 10A (an outer surface 102a of the nozzle plate 102) and the inner wall of the liquid chamber 10A (an inner surface 102b of the nozzle plate 102).

There is a concern that the contaminants W1 and W2 will be mixed with particles manufactured using the liquid droplet-forming device 1 and degrade the quality. Further, when the contaminants W1 and W2 clog the discharge holes 102x, there is a concern that the particle diameter of the liquid droplet D to be formed will not be as set. Furthermore, when the contaminants W1 and W2 clog the discharge holes 102x, there is a concern that the discharge amount of the liquid droplets D will deteriorate, and productivity deteriorates.

In the liquid droplet-forming device 1, the washing unit 20 can be used to easily wash such contamination of the discharge unit 10.

### (First washing (discharge hole washing))

First, as shown in FIG. 4, the sealed space-forming means 21 is brought into contact with the lower surface 100a of the discharge head 100 to form the sealed space 21A. Next, the second flow path 252 and the third flow path 253 are closed by turning off the switching valves SV4 and SV6.

In this state, another switching valve is controlled to supply the washing liquid L2 from the washing liquid supply unit 23 to the first flow path 251. The washing liquid L2 is supplied from the first flow path 251 to the liquid chamber 10A, and further supplied to the sealed space 21A through the discharge hole 102x.

Further, the waste liquid L3 ejected from the sealed space 21A is ejected to the waste liquid tank 241 through the fourth flow path 254.

As a result, the washing liquid can be caused to flow from the inside of the liquid chamber 10A toward the outside of the liquid chamber 10A to wash the liquid chamber 10A and the sealed space 21A. Due to the flow of the washing liquid L2 described above, mainly the contaminant W1 adhering to the outer surface 102a is lifted up or peeled off from the outer surface 102a.

### (Second washing (outer surface washing))

Next, as shown in FIG. 5, the second flow path 252 is closed by turning off the switching valve SV4. In this state, another switching valve is controlled to supply the washing liquid L2 from the washing liquid supply unit 23 to the first flow path 251 and the third flow path 253. As a result, the washing liquid L2 is supplied from the first flow path 251 to the liquid chamber 10A and further from the third flow path 253 to the sealed space 21A.

Further, the waste liquid L3 ejected from the sealed space 21A is ejected to the waste liquid tank 241 through the fourth flow path 254. As a result, it is possible to wash off mainly the contaminant W1 adhering to the outer surface 102a.

In addition, the washing liquid supply unit 23 may have a first supply unit that supplies the washing liquid L2 and a second supply unit that supplies the washing liquid L2 at a higher pressure than the first supply unit, and may be capable of supplying the washing liquid L2 independently from the first supply unit and the second supply unit. By using the washing liquid supply unit having such a configuration, the washing liquid L2 may be supplied from the second supply unit to the first flow path 251 and the washing liquid L2 may be supplied from the first supply unit to the third flow path 253.

The relatively high-pressure washing liquid L2 flows from the first flow path 251 into the sealed space 21A via the liquid chamber 10A and the discharge hole 102x. As a result, the flow of the washing liquid L2 in the sealed space 21A into the liquid chamber 10A is suppressed, and a problem of the contaminant W1 on the outer surface 102a flowing into the liquid chamber 10A is suppressed.

Further, in the second washing, the washing liquid L2 may be supplied only to the third flow path 253 without being supplied to the first flow path 251, and may flow only inside the sealed space 21A. Thereby, the outer surface 102a can be washed.

### (Third washing (discharge hole reverse washing))

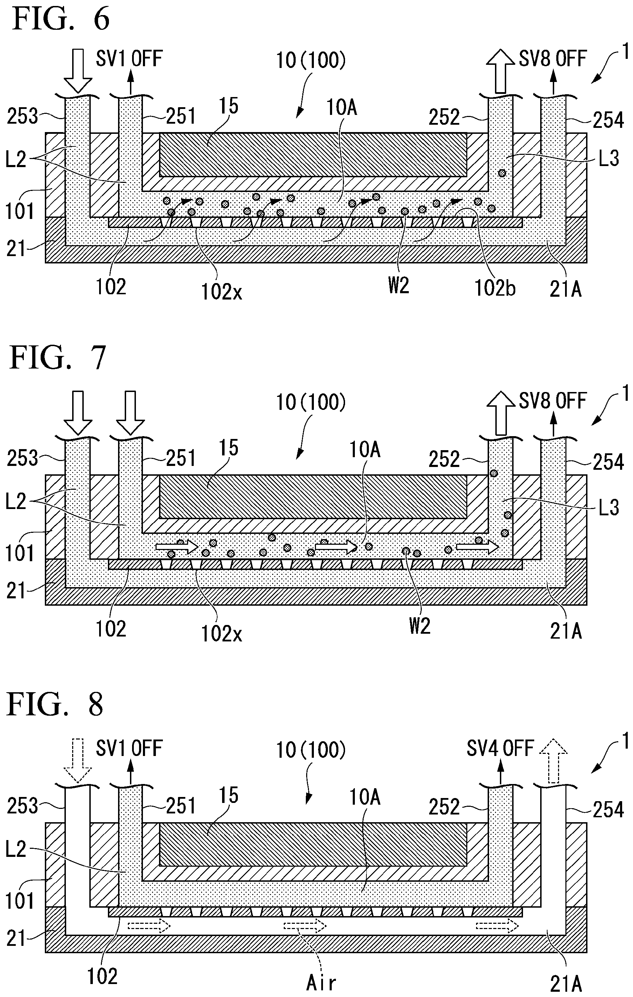

Next, as shown in FIG. 6, the first flow path 251 and the fourth flow path 254 are closed by turning off the switching valves SV1 and SV8.

In this state, another switching valve is controlled to supply the washing liquid L2 from the washing liquid supply unit 23 to the third flow path 253. The washing liquid L2 is supplied from the third flow path 253 to the sealed space 21A, and further supplied to the liquid chamber 10A through the discharge hole 102x.

Further, the waste liquid L3 ejected from the liquid chamber 10A is ejected to the waste liquid tank 241 through the second flow path 252.

As a result, the washing liquid L2 can flow from the outside of the liquid chamber 10A toward the inside of the liquid chamber 10A to wash the liquid chamber 10A and the sealed space 21A. Due to the flow of the washing liquid L2 described above, mainly the contaminant W2 adhering to the inner surface 102b and the inside of the discharge holes 102x is lifted up or peeled off.

### (Fourth washing (circulation washing))

Next, as shown in FIG. 7, the fourth flow path 254 is closed by turning off the switching valve SV8. In this state, another switching valve is controlled to supply the washing liquid L2 from the washing liquid supply unit 23 to the first flow path 251 and the third flow path 253. As a result, the washing liquid L2 is supplied from the first flow path 251 to the liquid chamber 10A and further from the third flow path 253 to the sealed space 21A.

Further, the waste liquid L3 ejected from the liquid chamber 10A is ejected to the waste liquid tank 241 through the second flow path 252. As a result, it is possible to wash off mainly the contaminant W2 adhering to the inner surface 102b and the inside of the discharge hole 102x.

In addition, by using the washing liquid supply unit having the above-described first supply unit and second supply unit as the washing liquid supply unit 23, the washing liquid L2 may be supplied from the first supply unit to the first flow path 251, and the washing liquid L2 may be supplied from the second supply unit to the third flow path 253.

The relatively high-pressure washing liquid L2 flows from the third flow path 253 into the liquid chamber 10A via the sealed space 21A and the discharge hole 102x. As a result, the flow of the washing liquid L2 in the liquid chamber 10A into the sealed space 21A is suppressed, and a problem of the contaminant W2 on the inner surface 102b flowing into the sealed space 21A is suppressed.

Further, in the fourth washing, the washing liquid L2 may be supplied only to the first flow path 251 without being supplied to the third flow path 253, and may flow only inside the liquid chamber 10A. Thereby, the inner surface 102b can be washed.

Next, as shown in FIG. 8, the first flow path 251 and the second flow path 252 are closed by turning off the switching valves SV1 and SV4, respectively. In this state, by causing the pressurized air to flow from the third flow path 253 toward the fourth flow path 254, the washing liquid L2 stored in the third flow path 253, the sealed space 21A, and the fourth flow path 254 is ejected. The ejected washing liquid L2 is ejected to a waste liquid tank, for example, as waste liquid.

Further, the washing liquid L2 inside the liquid chamber 10A is replaced with the raw material liquid L1. The ejected washing liquid L2 is ejected to a waste liquid tank, for example, as waste liquid.

By such an operation, washing of the discharge unit 10 is completed.

According to the liquid droplet-forming device 1 configured as described above, it is possible to provide a liquid droplet-forming device capable of efficiently and effectively washing the nozzles.

In addition, in the liquid droplet-forming device 1, when the type of the raw material liquid to be discharged is changed, or when a more advanced washing state is required such as after long-term operation, the discharge head 100 may be disassembled and washed.

Further, in the liquid droplet-forming device 1, four washings from the first washing to the fourth washing are performed step by step when washing the discharge head 100, but the present invention is not limited to this. In the liquid droplet-forming device 1, at least one of the four washings from the first washing to the fourth washing may be performed independently, and the washing may be performed in combination with another washing method such as washing after disassembling.

For example, in the liquid droplet-forming device 1, the outer surface 102a of the nozzle plate 102 may be washed separately, and then the inside of the liquid chamber 10A may be washed by sequentially performing the third washing and the fourth washing described above.

Further, in the liquid droplet-forming device 1, the first washing and the second washing described above may be sequentially performed to wash the outer surface 102a of the nozzle plate 102, and then, for example, the inside of the liquid chamber 10A may be washed by disassembling and washing the liquid droplet-forming device 1.

In addition, in the present embodiment, when washing the discharge head 100, for example, in the first washing, the washing liquid L2 is supplied from the first flow path 251 to the liquid chamber 10A, but the washing liquid L2 may be supplied from the second flow path 252 to the liquid chamber 10A. The supply direction of the washing liquid L2 can be appropriately controlled by operating the switching means 26.

That is, the first flow path 251 and the second flow path 252 can be used interchangeably. At this time, both the third flow path 253 and the fourth flow path 254 can be used interchangeably. Specifically, when the washing liquid L2 is supplied from the second flow path 252 to the liquid chamber 10A in the first washing, the third flow path 253 and the fourth flow path 254 may be interchanged, and the washing liquid L2 supplied to the sealed space 21A through the discharge hole 102x may be ejected from the third flow path 253.

Similarly, in the second washing, the third washing, and the fourth washing, the first flow path 251 and the second flow path 252 can be interchanged, and the third flow path 253 and the fourth flow path 254 can also be interchanged.

### [Second Embodiment]

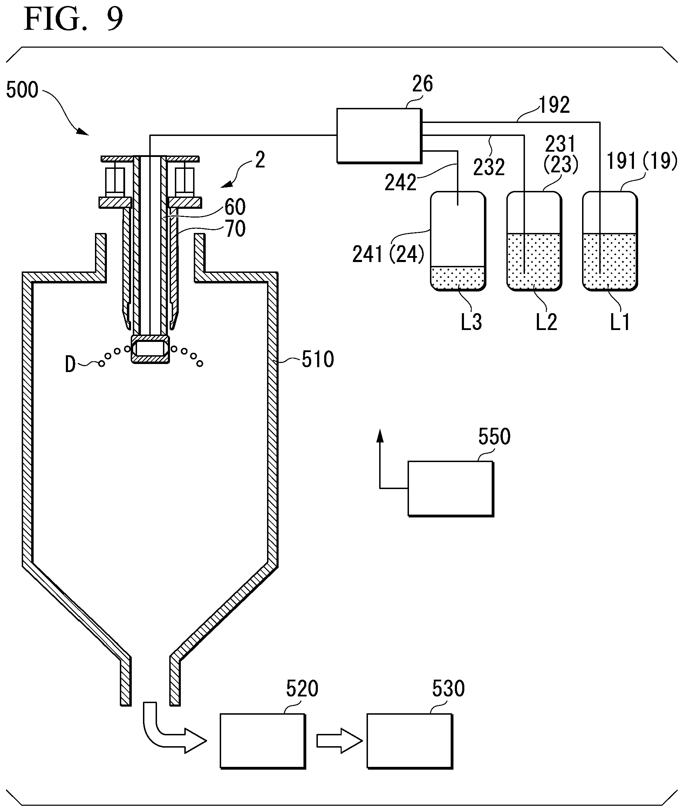

FIGS. 9 to 11 are explanatory views of a liquid droplet-forming device and a fine particle-manufacturing device according to the second embodiment. In the present embodiment, the same reference numerals will be given to the same components as in the first embodiment, and the detailed description thereof will be omitted.

### <<Fine particle-manufacturing device>>

FIG. 9 is a schematic diagram showing a fine particle-manufacturing device 500. The fine particle-manufacturing device 500 includes the liquid droplet-forming device 2, a chamber 510, a collection unit 520, a storage unit 530 and a control unit 550. In the fine particle-manufacturing device 500, fine particles are obtained by solidifying the liquid droplets D discharged from the liquid droplet-forming device 2.

The means for solidifying the liquid droplets D in the fine particle-manufacturing device 500 is not particularly limited as long as the liquid droplets D can be solidified (into a solid state), and known configurations can be appropriately selected. For example, when the liquid droplet D contains a solid raw material and a volatile solvent, the liquid droplet D can be solidified by volatilizing the solvent from the liquid droplet D.

The fine particles to be manufactured are not particularly limited, but preferably contain at least one base material and a physiologically active substance having physiological activity, and if necessary, other materials. The physiologically active substance may be any substance as long as the physiologically active substance has some physiological activity in vivo, but in a preferable aspect, the physiologically active substance has the property in which the physiological activity changes due to chemical or physical stimulation such as heating, cooling, shaking, stirring, and pH change.

The liquid droplet-forming device 2 is provided above the cylindrical chamber 510 having an internal space, and discharges the liquid droplets D into the internal space of the chamber 510. The configuration of the liquid droplet-forming device 2 will be described later.

The chamber 510 is, for example, a cylindrical member with upper and lower openings. The liquid droplet-forming device 2 is inserted into the upper opening portion of the chamber 510. The lower portion of the chamber 510 tapers downward in diameter. The lower opening portion of the chamber 510 converges in the vicinity of the central axis.

The pressure and temperature of the internal space of the chamber 510 are managed, and the liquid droplets D discharged from the liquid droplet-forming device 2 are solidified. In the chamber 510, a descending airflow (conveying airflow) is formed from above. The liquid droplets D discharged from the liquid droplet-forming device 2 are conveyed downward by gravity and the conveying airflow. The angle between the flow direction of the conveying airflow and the direction in which the liquid droplets D are discharged from the liquid droplet-forming device 2 is preferably in the range of 0 to 90 degrees. The "angle" here is defined as the angle formed by the vector of the "flow direction of the conveying airflow" and the "direction of discharging the liquid droplets D from the liquid droplet-forming device 2".

For example, the solvent is removed from the liquid droplet D while it is being transported by the conveying airflow, and the liquid droplets D are solidified.

Removal of the solvent can be appropriately controlled by adjusting the temperature of the internal space of the chamber 510, the pressure of the internal space, the temperature of the conveying airflow, the type of gas in the conveying airflow, and the type of solvent (vapor pressure).

After reaching the lower portion of the chamber 510, fine particles generated by solidifying the liquid droplet D are ejected from the lower opening portion of the chamber 510.

The collection unit 520 collects fine particles ejected from the lower portion of the chamber 510. The collection unit 520 can employ a known configuration such as cyclone collector or a back filter.

The storage unit 530 stores the fine particles collected by collection unit 520.

The control unit 550 controls the operation of each component of the fine particle-manufacturing device 500. The control unit 550 may also serve as the control unit of the liquid droplet-forming device 2.

It should be noted that the removal of the solvent from the liquid droplets D does not necessarily have to be completed before reaching the lower portion of the chamber 510 as long as coalescence of the liquid droplets D can be suppressed. A configuration for additionally drying the fine particles collected by the collection unit 520, which will be described later, may be provided.

### <<Liquid droplet-forming device>>

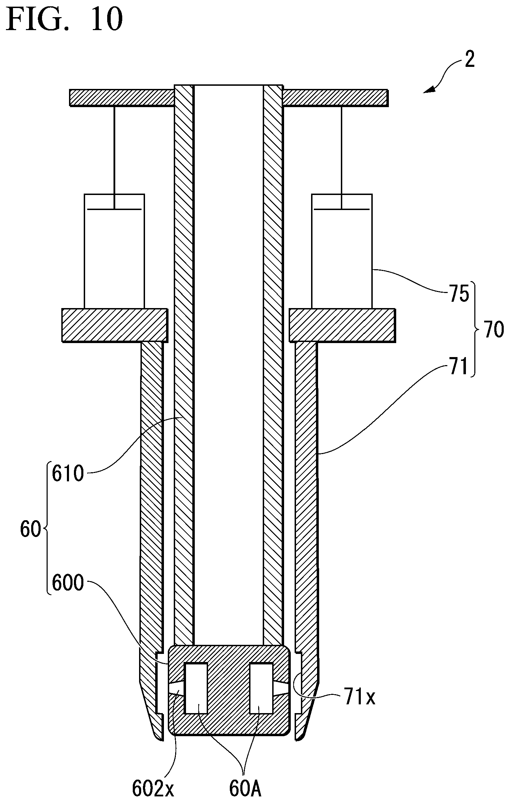

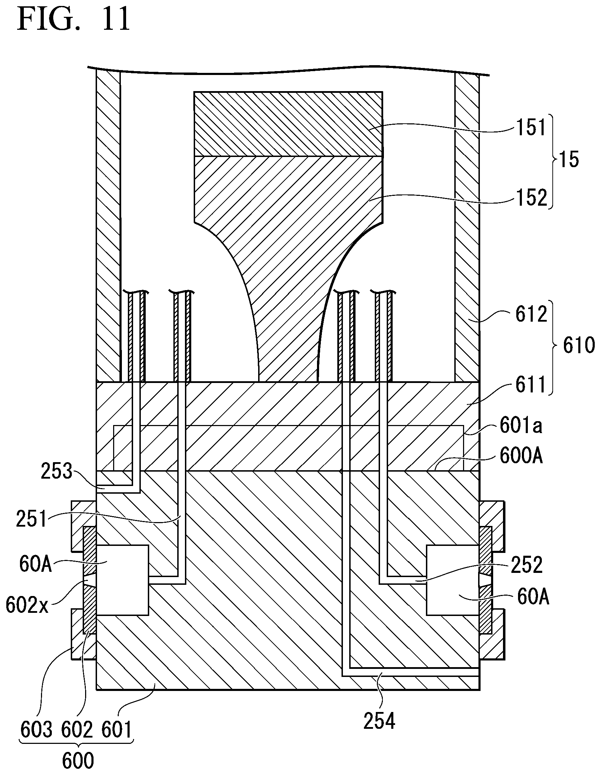

FIGS. 10 and 11 are explanatory views of the liquid droplet-forming device 2. FIG. 10 is an overall view, and FIG. 11 is an enlarged view in the vicinity of the discharge head.

As shown in FIG. 10, the liquid droplet-forming device 2 has a discharge unit 60 and a washing unit 70.

### <Discharge unit>

The discharge unit 60 discharges liquid droplets of the raw material liquid described above. The discharge unit 60 has a liquid chamber 60A for storing the raw material liquid, and discharge holes 602x communicating with the liquid chamber 60A. The raw material liquid stored in the liquid chamber 60A is discharged through the discharge holes 602x and formed into a spherical shape in the gas phase due to the surface tension of the raw material liquid.

The discharge unit 60 has a discharge head 600 having the liquid chamber 60A and the discharge holes 602x, and a discharge unit main body 610 to which the discharge head 600 is connected. The discharge unit 60 has a cylindrical shape, and the discharge head 600 is provided at the lower end of the cylinder.

As shown in FIG. 11, the discharge head 600 has a head main body 601, a nozzle plate 602, and a cover 603. The discharge head 600 can be disassembled into the head main body 601, the nozzle plate 602, and the cover 603. Therefore, when the type of the raw material liquid to be discharged is changed, or when a more advanced washing state is required such as after long-term operation, the discharge head 600 may be disassembled and washed.

The head main body 601 has a recess portion 60x corresponding to the liquid chamber 60A. The recess portion 60x is formed extending in the circumferential direction of the head main body 601.

The nozzle plate 602 has the plurality of discharge holes 602x. The nozzle plate 602 is a curved plate material extending in the circumferential direction of the head main body 601, and overlaps the recess portion 601x to close the recess portion 601x, thereby forming a part of the wall surface of the liquid chamber 60A. The plurality of discharge holes 602x are provided to be arranged in the extending direction of the nozzle plate 602.

**In** the discharge head 600, the plurality of discharge holes 602x are formed to be arranged in the circumferential direction along the side surface of the discharge head 600 (discharge unit 60).

The cover 603 presses the nozzle plate 602 against the head main body 601 and keeps the contact surface between the head main body 601 and the nozzle plate 602 liquid-tight.

The discharge unit main body 610 has a connection unit 611 connected to the discharge head 600 and a cylinder unit 612 continuous with the connection unit 611.

In the connection unit 611, the discharge head 600 and the discharge unit main body 610 are configured to be attachable and detachable at a position 600A. The upper end of the discharge head 600 (the upper end of the head main body 601) has a connection unit 601a connected to the discharge unit main body 610.

The connection unit 601a has a diameter smaller than that of the head main body 601, for example, and is formed in a coaxial columnar shape (projected shape). On the other hand, the connection unit 611 of the discharge unit main body 610 has a recess portion for accommodating the connection unit 601a at the lower end thereof. The connection unit 601a and the connection unit 611 employ, for example, a bayonet locking system, and are easily attachable and detachable.

On the inside of the cylinder unit 612, the vibration unit 15 that applies vibration to the raw material liquid stored in the liquid chamber 60A is provided. The vibration unit 15 includes a vibrator 151 that generates vibration, and amplification means 152 which is connected to the vibrator and amplifies the vibration. The vibration unit 15 is connected to the connection unit 611 at the amplification means 152.

Since the vibration unit 15 is provided on the discharge unit main body 610 side, the discharge unit 60 does not need removal of the wiring connected to the vibration unit 15 when removing the discharge head 600 from the discharge unit main body 610, and the operation is easy. Similarly, when the discharge head 600 is attached to the discharge unit main body 610, the discharge unit 60 does not need to confirm the electrical continuity of the wiring connected to the vibration unit 15, which facilitates the operation.

Further, since the vibration unit 15 is provided on the discharge unit main body 610 side, the discharge unit 60 does not require a configuration such as a connection terminal for removing and reconnecting the wiring connected to the vibration unit 15. Therefore, the problem caused by adopting such a configuration, for example, the problem that the vibration unit 15 does not operate due to poor contact caused by contaminant on the connection terminal, will not occur.

Furthermore, since the vibration unit 15 is provided on the discharge unit main body 610 side, when the discharge head 600 is disassembled and washed, it is also possible to perform treatment that deteriorates the electric wiring such as ultrasonic washing while the discharge head 600 is immersed in the washing liquid, or sterilization treatment (for example, autoclaving or boiling).

The vibrator 151 can employ the same configuration as the vibration unit used in the first embodiment.

A known horn-type vibration amplifier can be employed as the amplification means 152. Examples of horn-type vibration amplifiers include each configuration such as step type, exponential type, and conical type.

### <Washing unit>

As shown in FIG. 10, the washing unit 70 has sealed space-forming means 71 and moving means 75.

The sealed space-forming means 71 is a cylindrical member that covers the side surface of the discharge head 600. The sealed space-forming means 71 can liquid-tightly form a sealed space 71A communicating with the liquid chamber 60A through the discharge holes 602x outside the discharge unit 60. **In** addition, in FIG. 10, the discharge head 600 and the sealed space-forming means 71 are shown separately in order to make each configuration easier to see.

Specifically, the sealed space-forming means 71 has a recess portion 71x facing the discharge head 600 and is in contact with the discharge head 600 from the side surface of the discharge head 600 while covering the discharge holes 602x. The recess portion 71x is continuous in the circumferential direction on the inner surface of the sealed space-forming means 71. A space surrounded by the recess portion 71x and the side surface of the discharge head 600 is the sealed space 71A.

The sealed space-forming means 71 can be moved in the up-down direction by the moving means 75 provided above the sealed space-forming means 71. FIG. 9 shows a state where the sealed space-forming means 71 is upwardly retracted, and FIG. 10 shows a state where the sealed space-forming means 71 is lowered to cover the side surface of the discharge head 600 to form the sealed space 71A.

In the present embodiment, the sealed space-forming means 71 is moved up and down, but the discharge unit 60 may be configured to move up and down, and the relative position between the discharge unit 60 and the sealed space-forming means 71 may be changed.

In addition, the washing unit 70 has the flow unit shown in the first embodiment. The flow unit includes the washing liquid supply unit 23, the waste liquid ejection unit 24, the first flow path 251, the second flow path 252, the third flow path 253, the fourth flow path 254, and the switching means 26.

The first flow path 251 and the second flow path 252 are connected to the liquid chamber 60A. The first flow path 251 and the second flow path 252 are provided extending inside the cylinder unit 612 and are connected to the washing liquid supply unit 23 and the waste liquid ejection unit 24 via the switching means 26, respectively.

The third flow path 253 and the fourth flow path 254 are connected to the sealed space 71A. The third flow path 253 and the fourth flow path 254 are provided to extend inside the cylinder unit 612 and are connected to the washing liquid supply unit 23 and the waste liquid ejection unit 24 via the switching means 26, respectively.

The first flow path 251, the second flow path 252, the third flow path 253 and the fourth flow path 254 are separated in the middle of each path when the discharge head 600 is removed from the discharge unit main body 610. In addition, the first flow path 251, the second flow path 252, the third flow path 253, and the fourth flow path 254 connect the discharge head 600 to the discharge unit main body 610, and accordingly, each flow path in the discharge head 600 and each flow path in the discharge unit main body 610 are connected to each other.

Even in the liquid droplet-forming device 2 having such a configuration, when the raw material liquid is repeatedly discharged from the discharge holes 602x, on the outer wall of the liquid chamber 60A (the outer surface of the nozzle plate 602) and the inner wall of the liquid chamber 60A (the inner surface of the nozzle plate 102)), the solid content contained in the raw material liquid L1 may partially precipitate, and the contaminants may adhere.

**In** the liquid droplet-forming device 2, the washing unit 70 can be used to easily wash such contamination of the discharge unit 60. The method of washing the discharge unit 60 using the washing unit 70 is the same as the washing of the discharge unit 10 using the washing unit 20 of the first embodiment.

According to the liquid droplet-forming device 2 configured as described above, it is possible to provide a liquid droplet-forming device capable of efficiently and effectively washing the nozzles.

Further, according to the fine particle-manufacturing device 500 configured as described above, the liquid droplet-forming device 2 is provided, and high-quality fine particles can be manufactured.

### [Examples]

Hereinafter, the present invention will be described based on examples, but the present invention is not limited to the following examples.

In each example and comparative example, evaluation was made using the following raw material liquids.

Metformin hydrochloride (manufactured by Tokyo Chemical Industry Co., Ltd.) was pulverized with a ball mill to a volume-average particle diameter of 1.5 µm.

8 parts by mass of pulverized metformin hydrochloride, 12 parts by mass of lactic acid/glycolic acid copolymer (product name: PLGA-7510, manufactured by Wako Pure Chemical Industries, Ltd.), and 80 parts by mass of acetone (manufactured by Wako Pure Chemical Industries, Ltd.) were mixed, and stirring was performed at 1000 rpm for 1 hour using a stirring device (device name: magnetic stirrer, manufactured by AS ONE Corporation) to prepare a raw material liquid.

Since metformin hydrochloride is insoluble in acetone, the obtained raw material liquid was a dispersion of metformin hydrochloride.

### <Example 1>

The liquid droplet-forming device and the fine particle-manufacturing device described in the second embodiment were prepared. The volume of the liquid chamber was 150 mm³ and the volume of the sealed space was 1000 mm³.

The liquid droplet-forming device according to Example 1 was evaluated by the following procedure.

### ((1) Discharge before washing)

The nozzle plate was prepared by processing a nickel plate having a length of 42.5 mm, a width of 6.8 mm, and a thickness of 20 µm. A plurality of discharge holes having a diameter of 35 µm were formed in the nickel plate by electroforming. The distance between the discharge holes was set to 200 µm.

A raw material liquid was injected into the liquid chamber, and liquid droplets were discharged by applying a pressure of 0.1 MPa to the discharge hole of the raw material liquid in the liquid chamber while applying vibration of 70 kHz from the vibration unit. The pressure applied to the discharge hole was measured by a pressure-measuring instrument (AP-13S, manufactured by Keyence Corporation) installed at a position relatively close to the discharge hole in the first flow path. The pressure-measuring instrument was installed as close to the discharge hole as possible in the first flow path.

The chamber was cylindrical with a diameter of 800 mm and a height of 1540 mm. The liquid droplet-forming device was inserted into the chamber from the upper end of the chamber, and the discharge head was positioned 50 to 100 mm below the upper end of the chamber. Room-temperature air was caused to flow from the periphery of the liquid droplet-forming device toward the lower portion of the chamber at a rate of 1000 m³/min as a conveying airflow.

The raw material liquid was discharged from the liquid droplet-forming device, and the fine particles solidified in the chamber were collected by a cyclone collector installed in the lower portion of the chamber to obtain the particles before washing.

### ((2) Washing)

The washing unit was used to wash the discharge head once every 20 minutes. Washing was performed according to the following procedure.

### (Washing discharge head)

At the time of washing, first, after stopping the discharge of liquid droplets from the liquid droplet-forming device, the side surfaces of the discharge head were covered with the sealed space-forming means to form a sealed space. Acetone was used as washing liquid.

First, the washing liquid was supplied from the first flow path to the liquid chamber, and the washing liquid was caused to flow from the liquid chamber to the sealed space through the discharge hole and ejected from the fourth flow path. The pressure of the washing liquid supplied from the first flow path was set to 0.15 MPa, and the liquid feeding time of the washing liquid was set to 15 seconds (first washing, discharge hole washing).

Next, the washing liquid was supplied from the third flow path to the sealed space and ejected from the fourth flow path. The pressure of the washing liquid supplied from the third flow path was set to 0.15 MPa, and the liquid feeding time of the washing liquid was set to 5 seconds (second washing, outer surface washing). Approximately 50 to 100 mL of the washing liquid was flowed during the liquid feeding time.

Next, the washing liquid was supplied from the third flow path to the sealed space, and the washing liquid was caused to flow from the sealed space to the liquid chamber through the discharge hole, and ejected from the second flow path. The pressure of the washing liquid supplied from the third flow path was set to 0.15 MPa, and the liquid feeding time of the washing liquid was set to 15 seconds (third washing, discharge hole reverse washing).

Next, the washing liquid was supplied from the first flow path to the sealed space and ejected from the second flow path. The pressure of the washing liquid supplied from the first flow path was set to 0.15 MPa, and the liquid feeding time of the washing liquid was set to 15 seconds (fourth washing. circulation washing). Approximately 50 to 100 mL of the washing liquid was flowed during the liquid feeding time.

Next, the washing liquid in the liquid chamber was replaced with the raw material liquid, and the sealed space-forming means was retracted to complete the washing.

### ((3) State of discharge holes after washing)

Regarding the discharge head after washing, the state of the discharge holes (nozzles) was evaluated by the method described later.

### ((4) Discharge after washing)

After washing, the raw material liquid was discharged under the same conditions as ((1) Discharge before washing) to obtain particles of Example 1 after washing. In addition, the recovery rate of the discharge holes (recovery rate after discharge) was evaluated by the method described later.

### (Examples 2 to 6, Comparative Example)

Examples 2 to 6 and Comparative Example were performed in the same manner as in Example 1, except that the above condition (washing of the discharge head) was changed to the conditions shown in Table 1.

In addition, in Comparative Example, the same device as in Examples 1 to 6 was used, but not all washing was performed. Therefore, it is considered that the results of the Comparative Example are the same as those of the configuration without the washing unit.

### (Measurement of average particle size distribution)

The average particle size distribution of the particles obtained in Examples 1 to 6 and Comparative Example ((4) Discharge after washing) was measured by the following method.

### - Particle diameter measurement method -

A measurement method using a flow particle image analyzer will be described below. As a measurement device, a flow particle image analyzer FPIA-3000 manufactured by Sysmex Corporation was used.

The measurement was performed according to the following procedures (1) to (3).
(1) Water used for measurement was passed through a filter to remove fine dust, and water of which the number of particles in the measurement range (equivalent circle diameter of 0.60 µm or more and less than 159.21 µm) was 20 or less in 10⁻³ cm³ of water was obtained.
(2) Several drops of a nonionic surfactant (preferably Contaminon N manufactured by Wako Pure Chemical Industries, Ltd.) was added to 10 ml of the water, 5 mg of a measurement sample was further added, and dispersion treatment was performed for 1 minute under conditions of 20 kHz and 50 W/10 cm³ using an ultrasonic disperser UH-50 manufactured by STM.
(3) Then, dispersion treatment was performed for a total of 5 minutes, and by using a sample dispersion with a particle concentration of a measurement sample of 4000 to 8000 particles/10⁻³ cm³ (for particles in the range of equivalent circle diameters for measurement), the particle size distribution of particles having an equivalent circle diameter of 0.60 µm or more and less than 159.21 µm was measured.

The sample dispersion was passed through a flow path (spreading along the flow direction) of a flat and even transparent flow cell (thickness approximately 200 µm). A strobe and a CCD camera were mounted on the flow cell to be positioned opposite to each other to form an optical path that crossed through the thickness of the flow cell. While the sample dispersion was flowing, strobe light was illuminated at 1/30 second intervals to obtain an image of the particles flowing through the flow cell, and as a result, each particle was taken as a two-dimensional image with a constant range parallel to the flow cell. From the area of the two-dimensional image of each particle, the diameter of a circle having the same area was calculated as the equivalent circle diameter.

It was possible to measure the equivalent circle diameters of 1200 or more particles in approximately 1 minute, and the number based on the equivalent circle diameter distribution and the percentage of particles having the specified equivalent circle diameter (% by number) were measured. Results (% by frequency and % by accumulation) were obtained by dividing the range 0.06 to 400 µm into 226 channels (divided into 30 channels per octave). In the actual measurement, particles were measured in the range of equivalent circle diameters of 0.60 µm or more and less than 159.21 µm.

The volume-average particle diameter (Dv) and the number-average particle diameter (Dn) were obtained, and Dv/Dn was calculated as an average particle size distribution.

Table 1 shows the evaluation results.

In each column of Table 1, a four-level evaluation of A, B, C, and D was described, and A, B, and C were evaluated as good, and D was evaluated as poor. In addition, Table 2 shows the evaluation criteria described in Table 1.

Each evaluation described in Table 1 was performed by taking an image of the discharge hole surface with a camera after performing washing under each condition, and by enlarging and visually confirming the obtained image. Specifically, an image of a range of approximately 2 mm × 1.5 mm on the discharge hole surface was taken, and the captured image was enlarged and displayed on the entire screen of a 19-inch display (screen aspect ratio 4:3) for confirmation. From the ratio of the diagonal lengths of the captured image and the display (2.5 mm:482.6 mm), the magnification can be calculated as 193 times. The definition of each evaluation is as follows.

### (State of discharge holes after washing)

In ((3) State of discharge holes after washing), the number of discharge holes around which contaminant remained was counted in the captured image. When the "contaminant" remained, it was observed that a solid substance presumed to be metformin hydrochloride clogged the nozzle hole or adhered to the nozzle surface. The ratio of the number of discharge holes (B) with residual contaminant to the number of all discharge holes (A) was obtained as a percentage (B/A × 100%).

### (Recovery rate after discharge)

In ((4) Discharge after washing), the raw material liquid was discharged from the discharge holes after washing, and the ratio of the number of discharge holes (C) for normal discharge to the number of all discharge holes (A) was obtained as a percentage (C/A x 100%).

"Normal discharge" means that liquid droplets were discharged from the discharge holes in the direction perpendicular to the nozzle plate, in the operation of discharging one liquid droplet.

Therefore, when (i) no discharge was performed, (ii) the raw material liquid dripped from the discharge hole along the nozzle plate surface, (iii) the liquid droplet was discharged at a curve rather than perpendicular to the nozzle plate, and (iv) a plurality of liquid droplets were discharged from the discharge holes, the operation of discharging one liquid droplet was evaluated as "not normal discharge".

### (Average particle size distribution)

The average particle size distribution of the particles obtained in ((4) Discharge after washing) was measured.

### (Effect after washing)

The lowest evaluation result among the three evaluation items, that is, the state of discharge holes after washing, recovery rate after discharge, and average particle size distribution, is shown.

**[Table 1]**

| | Discharge pressure [MPa] | Washing liquid pressure [MPa] | Discharge hole washing | Outer surface washing | Discharge hole backwashing | Circulation washing | State of discharge holes after washing | Recovery rate after discharge | Average particle size distribution | Washing effect |
|---|---|---|---|---|---|---|---|---|---|---|
| Example 1 | 0.1 | 0.15 | Performed | Performed | Performed | Performed | A | A | A | A |
| Example 2 | 0.1 | 0.15 | Performed | Not performed | Performed | Performed | B | B | A | B |
| Example 3 | 0.1 | 0.15 | Performed | Performed | Not performed | Performed | B | A | A | B |
| Example 4 | 0.1 | 0.15 | Performed | Performed | Performed | Not performed | A | A | B | B |
| Example 5 | 0.1 | 0.15 | Not performed | Performed | Performed | Performed | B | B | A | B |
| Example 6 | 0.1 | 0.05 | Performed | Performed | Performed | Performed | B | B | B | B |
| Comparative Example | 0.1 | 0.15 | Not performed | Not performed | Not performed | Not performed | D | D | D | D |

**[Table 2]**

| Item | A | B | C | D |
|---|---|---|---|---|
| State of discharge holes after washing | 0% | More than 0% and 5% or less | More than 5% and 10% or less | More than 10% |
| Recovery rate after discharge | Higher than 98% and 100% or less | Higher than 95% and 98% or less | Higher than 90% and 95% or less | 90% or less |
| Average particle size distribution | 1.00 or more and 1.08 or less | More than 1.08 and 1.12 or less | More than 1.12 and 1.18 or less | More than 1.18 |

In any of Examples 1 to 6, the effect of washing the discharge head using the sealed space-forming unit was observed, and the state of the discharge holes after washing was good. Moreover, it was found that the particle size distribution of the formed particles was small, and the variation in particle size was small.

On the other hand, in the Comparative Example in which the washing using the sealed space-forming unit was not performed, a large amount of contaminants adhered to the discharge holes and the vicinity of the discharge holes as the device was used. In addition, in Comparative Example, the particle size distribution of the particles was affected by the adherence of contaminant, and the variation was greater than in Examples 1 to 6.

From the above results, it was confirmed that the present invention was useful.

### [Reference Signs List]

1, 2: Liquid droplet-forming device
10, 60: Discharge unit
10A, 60A: Liquid chamber
15: Vibration unit
20, 70: Washing unit
21, 71: Sealed space-forming means
21A, 71A: Sealed space
22: Flow unit
23: Washing liquid supply unit
24: Waste liquid ejection unit
50, 550: Control unit
100, 600: Discharge head
101, 601: Head main body
102, 602: Nozzle plate
102x, 602x: Discharge hole
110, 610: Discharge unit main body
151: Vibrator
152: Amplification means
191: Raw material liquid tank
231: Washing liquid tank
251: First flow path
252: Second flow path
253: Third flow path
254 Fourth flow path
500: Fine particle-manufacturing device
D: Liquid droplet
L1: Raw material liquid
L2: Washing liquid
L3: Waste liquid

## Claims

1. A liquid droplet-forming device (1; 2), comprising:
a discharge unit (10; 60), comprising:
a liquid chamber (10A; 60A) for storing a raw material liquid;
a discharge hole (102x; 602x) in communication with the liquid
chamber and which is configured to discharge the raw material liquid from the liquid chamber in a form of liquid droplets; first and second flow paths connected to the liquid chamber and provided to be openable and closable; and
third and fourth flow paths; and
sealed space-forming means (21; 71) capable of forming a sealed space, which communicates with the liquid chamber through the discharge hole on a side opposite to the liquid chamber of the discharge hole,
wherein, the third and fourth flow paths of the discharge unit are provided to be openable and closable at positions connectable to the sealed space, and wherein said first, second, third and fourth flow paths are configured to communicate with each other through the sealed space and/or through the discharge hole.

2. The liquid droplet-forming device according to Claim 1, wherein
an inside of the liquid chamber, the discharge hole, and the sealed space is washable by causing washing liquid to flow to the liquid chamber and the sealed space.

3. The liquid droplet-forming device according to Claim 2, further comprising:
a washing liquid supply unit (23) configured to supply the washing liquid; and
a waste liquid ejection unit (24) configured to eject waste liquid generated by washing the inside of the liquid chamber, the discharge hole, and the sealed space, wherein
the first flow path and the second flow path are connected to the washing liquid supply unit and the waste liquid ejection unit, and
the third flow path and the fourth flow path are connected to the washing liquid supply unit and the waste liquid ejection unit.

4. The liquid droplet-forming device according to Claim 3, further comprising:
a control unit (50; 550) configured to control at least the washing liquid supply unit and the waste liquid ejection unit, wherein
the control unit performs first washing in which the second flow path and the third flow path are closed, the washing liquid is supplied from the first flow path to the sealed space through the liquid chamber, and the waste liquid is ejected from the fourth flow path to the sealed space.

5. The liquid droplet-forming device according to Claim 3 or 4, further comprising:
a control unit (50; 550) configured to control at least the washing liquid supply unit and the waste liquid ejection unit, wherein
the control unit performs second washing in which the second flow path is closed, the washing liquid is supplied from one of the third flow path and the fourth flow path to the sealed space, and the waste liquid in the sealed space is ejected from the other of the third flow path and the fourth flow path.

6. The liquid droplet-forming device according to Claim 5, wherein
the washing liquid supply unit includes
a first supply unit that supplies the washing liquid, and
a second supply unit that supplies the washing liquid at a higher pressure than the first supply unit, and
in the second washing, the washing liquid is supplied from the second supply unit to the first flow path, and the washing liquid is supplied from the first supply unit to one of the third flow path and the fourth flow path.

7. The liquid droplet-forming device according to any one of Claims 3 to 6, further comprising:
a control unit (50; 550) configured to control at least the washing liquid supply unit and the waste liquid ejection unit, wherein
the control unit performs third washing in which the first flow path and the fourth flow path are closed, the washing liquid is supplied from the third flow path to the liquid chamber through the sealed space, and the waste liquid in the liquid chamber is ejected from the second flow path.

8. The liquid droplet-forming device according to any one of Claims 3 to 7, further comprising:
a control unit (50; 550) configured to control at least the washing liquid supply unit and the waste liquid ejection unit, wherein
the control unit performs fourth washing in which the fourth flow path is closed, the washing liquid is supplied from one of the first flow path and the second flow path to the liquid chamber, and the waste liquid in the liquid chamber is ejected from the other of the first flow path and the second flow path.

9. The liquid droplet-forming device according to Claim 8, wherein
the washing liquid supply unit includes
a first supply unit that supplies the washing liquid, and
a second supply unit that supplies the washing liquid at a higher pressure than the first supply unit, and
in the fourth washing, the washing liquid is supplied from the second supply unit to the third flow path, and the washing liquid is supplied from the first supply unit to one of the first flow path and the second flow path.

10. The liquid droplet-forming device according to any one of Claims 3 to 9, wherein
the washing liquid supply unit and a raw material liquid supply unit (19) that supplies the raw material liquid are connected to the first flow path to be switchable.

11. The liquid droplet-forming device according to any one of Claims 1 to 10, wherein the discharge unit comprises:
a discharge head (100; 600) having the liquid chamber and the discharge hole; and
a discharge unit main body (110; 610) to which the discharge head is connected, wherein
the discharge head and the discharge unit main body are configured to be attachable and detachable.

12. The liquid droplet-forming device according to Claim 11, wherein
the discharge head includes
a head main body (101; 601) provided with the liquid chamber, and
a nozzle plate (102; 602) that forms a part of a wall surface of the liquid chamber and has the discharge hole, and
the discharge head is disassemblable into the head main body and the nozzle plate.

13. The liquid droplet-forming device according to Claim 11 or 12, wherein
the discharge unit main body has a vibration unit (15) that applies vibration to the raw material liquid stored in the liquid chamber.

14. The liquid droplet-forming device according to Claim 13, wherein
the vibration unit includes
a vibrator (151) that generates vibration, and
amplification means (152) which is connected to the vibrator and amplifies the vibration.

15. A fine particle-manufacturing device (500), comprising:
the liquid droplet-forming device (1; 2) according to any one of Claims 1 to 14; and
solidification means configured to solidify liquid droplets discharged from the liquid droplet-forming device.

## Patentansprüche

1. Flüssigkeitströpfchenbildungsvorrichtung (1; 2), Folgendes umfassend:
eine Ablasseinheit (10; 60), Folgendes umfassend:
eine Flüssigkeitskammer (10A; 60A) zum Speichern einer Rohmaterialflüssigkeit;
ein Ablassloch (102x; 602x) in Kommunikation mit der Flüssigkeitskammer und das konfiguriert ist, um Rohmaterialflüssigkeit von der Flüssigkeitskammer in einer Form von Flüssigkeitströpfchen abzulassen; erste und zweite Fließwege, die mit der Flüssigkeitskammer verbunden sind und öffenbar und schließbar bereitgestellt sind; und
dritte und vierte Fließwege; und
Mittel zum Bilden eines abgedichteten Raums (21; 71), das fähig ist, einen abgedichteten Raum zu bilden, der durch das Ablassloch an einer der Flüssigkeitskammer des Ablasslochs gegenüberliegenden Seite mit der Flüssigkeitskammer kommuniziert,
wobei die dritten und vierten Fließwege der Ablasseinheit bereitgestellt werden, um an mit dem abgedichteten Raum verbindbaren Positionen öffenbar und schließbar zu sein, und wobei die ersten, zweiten, dritten und vierten Fließwege konfiguriert sind, um miteinander durch den abgedichteten Raum und/oder durch das Ablassloch zu kommunizieren.

2. Flüssigkeitströpfchenbildungsvorrichtung nach Anspruch 1, wobei
eine Innenseite der Flüssigkeitskammer, des Ablasslochs und des abgedichteten Raums durch Veranlassen von Waschflüssigkeit, zu der Flüssigkeitskammer und dem abgedichteten Raum zu fließen, waschbar ist.

3. Flüssigkeitströpfchenbildungsvorrichtung nach Anspruch 2, ferner umfassend:
eine Waschflüssigkeitszuführeinheit (23), die konfiguriert ist, um die Waschflüssigkeit zuzuführen; und
eine Abfallflüssigkeitsausstoßeinheit (24), die konfiguriert ist, um durch Waschen der Innenseite der Flüssigkeitskammer, des Ablasslochs und des abgedichteten Raums erzeugte Abfallflüssigkeit auszustoßen, wobei
der erste Fließweg und der zweite Fließweg mit der Waschflüssigkeitszuführeinheit und der Abfallflüssigkeitsausstoßeinheit verbunden sind, und
der dritte Fließweg und der vierte Fließweg mit der Waschflüssigkeitszuführeinheit und der Abfallflüssigkeitsausstoßeinheit verbunden sind.

4. Flüssigkeitströpfchenbildungsvorrichtung nach Anspruch 3, ferner umfassend:
eine Steuereinheit (50; 550), die konfiguriert ist, um mindestens die Waschflüssigkeitszuführeinheit und die Abfallflüssigkeitsausstoßeinheit zu steuern, wobei
die Steuereinheit erstes Waschen durchführt, wobei der zweite Fließweg und der dritte Fließweg geschlossen sind, die Waschflüssigkeit von dem ersten Fließweg durch die Flüssigkeitskammer dem abgedichteten Raum zugeführt wird, und die Abfallflüssigkeit von dem vierten Fließweg in den abgedichteten Raum ausgestoßen wird.

5. Flüssigkeitströpfchenbildungsvorrichtung nach Anspruch 3 oder 4, ferner umfassend:
eine Steuereinheit (50; 550), die konfiguriert ist, um mindestens die Waschflüssigkeitszuführeinheit und die Abfallflüssigkeitsausstoßeinheit zu steuern, wobei
die Steuereinheit zweites Waschen durchführt, wobei der zweite Fließweg geschlossen ist, die Waschflüssigkeit von einem von dem dritten Fließweg und dem vierten Fließweg dem abgedichteten Raum zugeführt wird, und die Abfallflüssigkeit in dem abgedichteten Raum von dem anderen von dem dritten Fließweg und dem vierten Fließweg ausgestoßen wird.

6. Flüssigkeitströpfchenbildungsvorrichtung nach Anspruch 5, wobei die Waschflüssigkeitszuführeinheit
eine erste Zuführeinheit, die Waschflüssigkeit zuführt, und
eine zweite Zuführeinheit, die Waschflüssigkeit mit einem höheren Druck als die erste Zuführeinheit zuführt, einschließt, und
beim zweiten Waschen die Waschflüssigkeit von der zweiten Zuführeinheit dem ersten Fließweg zugeführt wird und die Waschflüssigkeit von der ersten Zuführeinheit einem von dem dritten Fließweg und dem vierten Fließweg zugeführt wird.

7. Flüssigkeitströpfchenbildungsvorrichtung nach einem der Ansprüche 3 bis 6, ferner umfassend:
eine Steuereinheit (50; 550), die konfiguriert ist, um mindestens die Waschflüssigkeitszuführeinheit und die Abfallflüssigkeitsausstoßeinheit zu steuern, wobei
die Steuereinheit drittes Waschen durchführt, wobei der erste Fließweg und der vierte Fließweg geschlossen sind, die Waschflüssigkeit von dem dritten Fließweg durch den abgedichteten Raum der Flüssigkeitskammer zugeführt wird, und die Abfallflüssigkeit von dem zweiten Fließweg in die Flüssigkeitskammer ausgestoßen wird.

8. Flüssigkeitströpfchenbildungsvorrichtung nach einem der Ansprüche 3 bis 7, ferner umfassend:
eine Steuereinheit (50; 550), die konfiguriert ist, um mindestens die Waschflüssigkeitszuführeinheit und die Abfallflüssigkeitsausstoßeinheit zu steuern, wobei
die Steuereinheit viertes Waschen durchführt, wobei der vierte Fließweg geschlossen ist, die Waschflüssigkeit von einem von dem ersten Fließweg und dem zweiten Fließweg der Flüssigkeitskammer zugeführt wird, und die Abfallflüssigkeit in der Flüssigkeitskammer von dem anderen von dem ersten Fließweg und dem zweiten Fließweg ausgestoßen wird.

9. Flüssigkeitströpfchenbildungsvorrichtung nach Anspruch 8, wobei die Waschflüssigkeitszuführeinheit
eine erste Zuführeinheit, die Waschflüssigkeit zuführt, und
eine zweite Zuführeinheit, die Waschflüssigkeit mit einem höheren Druck als die erste Zuführeinheit zuführt, einschließt, und
beim vierten Waschen die Waschflüssigkeit von der zweiten Zuführeinheit dem dritten Fließweg zugeführt wird und die Waschflüssigkeit von der ersten Zuführeinheit einem von dem ersten Fließweg und dem zweiten Fließweg zugeführt wird.

10. Flüssigkeitströpfchenbildungsvorrichtung nach einem der Ansprüche 3 bis 9, wobei die Waschflüssigkeitszuführeinheit und eine Rohmaterialflüssigkeitszuführeinheit (19), die die Rohmaterialflüssigkeit zuführt, mit dem ersten Fließweg verbunden sind, um umschaltbar zu sein.

11. Flüssigkeitströpfchenbildungsvorrichtung nach einem der Ansprüche 1 bis 10, wobei die Ablasseinheit Folgendes umfasst:
einen Ablasskopf (100; 600), der die Flüssigkeitskammer und das Ablassloch aufweist; und
einen Ablasseinheitshauptkörper (110; 610), mit dem der Ablasskopf verbunden ist, wobei
der Ablasskopf und der Ablasseinheitshauptkörper konfiguriert sind, um anbringbar und abnehmbar zu sein.

12. Flüssigkeitströpfchenbildungsvorrichtung nach Anspruch 11, wobei der Ablasskopf
einen mit der Flüssigkeitskammer bereitgestellten Kopfhauptkörper (101; 601) und eine Düsenplatte (102; 602), die einen Teil einer Wandfläche der Flüssigkeitskammer bildet und das Ablassloch aufweist, einschließt, und
der Ablasskopf in den Kopfhauptkörper und die Düsenplatte zerlegbar ist.

13. Flüssigkeitströpfchenbildungsvorrichtung nach Anspruch 11 oder 12, wobei der Ablasseinheitshauptkörper eine Vibrationseinheit (15) aufweist, die Vibration auf die in der Flüssigkeitskammer gespeicherte Rohmaterialflüssigkeit ausübt.

14. Flüssigkeitströpfchenbildungsvorrichtung nach Anspruch 13, wobei die Vibrationseinheit
einen Vibrationen erzeugenden Vibrator (151) und
Verstärkungsmittel (152), das mit dem Vibrator verbunden ist und die Vibration verstärkt, einschließt.

15. Feinpartikelherstellungsvorrichtung (500), Folgendes umfassend:
die Flüssigkeitströpfchenbildungsvorrichtung (1; 2) nach einem der Ansprüche 1 bis 14; und
Verfestigungsmittel, das konfiguriert ist, um von der Flüssigkeitströpfchenbildungsvorrichtung abgelassene Flüssigkeitströpfchen zu verfestigen.

## Revendications

1. Dispositif de formation de gouttelettes de liquide (1 ; 2), comprenant :
une unité d'évacuation (10 ; 60), comprenant :
une chambre de liquide (10A ; 60A) destinée à stocker une matière première liquide ;
un trou d'évacuation (102x ; 602x) en communication avec la chambre de liquide et qui est configuré pour évacuer la matière première liquide de la chambre de liquide sous une forme de gouttelettes de liquide ; des premier et deuxième chemins d'écoulement reliés à la chambre de liquide et prévus pour être ouverts et fermés ; et
des troisième et quatrième chemins d'écoulement ; et
un moyen de formation d'espace étanche (21 ; 71) apte à former un espace étanche, qui communique avec la chambre de liquide à travers le trou d'évacuation sur un côté en face de la chambre de liquide du trou d'évacuation,
dans lequel, les troisième et quatrième chemins d'écoulement de l'unité d'évacuation sont prévus pour être ouverts et fermés dans des positions pouvant être reliées à l'espace étanche, et dans lequel lesdits premier, deuxième, troisième et quatrième chemins d'écoulement sont configurés pour communiquer les uns avec les autres à travers l'espace étanche et/ou à travers le trou d'évacuation.

2. Dispositif de formation de gouttelettes de liquide selon la revendication 1, dans lequel
un intérieur de la chambre de liquide, du trou d'évacuation, et de l'espace étanche est lavable en amenant un liquide de lavage à s'écouler dans la chambre de liquide et l'espace étanche.

3. Dispositif de formation de gouttelettes de liquide selon la revendication 2, comprenant en outre :
une unité de fourniture de liquide de lavage (23) configurée pour fournir le liquide de lavage ; et
une unité de rejet de déchet liquide (24) configurée pour rejeter le déchet liquide généré par lavage de l'intérieur de la chambre de liquide, du trou d'évacuation, et de l'espace étanche, dans lequel
le premier chemin d'écoulement et le deuxième chemin d'écoulement sont reliés à l'unité de fourniture de liquide de lavage et à l'unité de rejet de déchet liquide, et
le troisième chemin d'écoulement et le quatrième chemin d'écoulement sont reliés à l'unité de fourniture de liquide de lavage et à l'unité de rejet de déchet liquide.

4. Dispositif de formation de gouttelettes de liquide selon la revendication 3, comprenant en outre :
une unité de commande (50 ; 550) configurée pour commander au moins l'unité de fourniture de liquide de lavage et l'unité de rejet de déchet liquide, dans lequel
l'unité de commande effectue un premier lavage durant lequel le deuxième chemin d'écoulement et le troisième chemin d'écoulement sont fermés, le liquide de lavage est fourni du premier chemin d'écoulement à l'espace étanche à travers la chambre de liquide, et le déchet liquide est rejeté du quatrième chemin d'écoulement à l'espace étanche.

5. Dispositif de formation de gouttelettes de liquide selon la revendication 3 ou la revendication 4, comprenant en outre :
une unité de commande (50 ; 550) configurée pour commander au moins l'unité de fourniture de liquide de lavage et l'unité de rejet de déchet liquide, dans lequel
l'unité de commande effectue un deuxième lavage durant lequel le deuxième trajet d'écoulement est fermé, le liquide de lavage est fourni d'un chemin d'écoulement parmi le troisième chemin d'écoulement et le quatrième chemin d'écoulement à l'espace étanche, et le déchet liquide dans l'espace étanche est rejeté de l'autre chemin d'écoulement parmi le troisième chemin d'écoulement et le quatrième chemin d'écoulement.

6. Dispositif de formation de gouttelettes de liquide selon la revendication 5, dans lequel l'unité de fourniture de liquide de lavage inclut :
une première unité de fourniture qui fournit le liquide de lavage, et
une deuxième unité de fourniture qui fournit le liquide de lavage à une pression supérieure à celle de la première unité de fourniture, et
durant le deuxième lavage, le liquide de lavage est fourni de la deuxième unité de fourniture au premier chemin d'écoulement, et le liquide de lavage est fourni de la première unité de fourniture à un chemin d'écoulement parmi le troisième chemin d'écoulement et le quatrième chemin d'écoulement.

7. Dispositif de formation de gouttelettes de liquide selon l'une quelconque des revendications 3 à 6, comprenant en outre :
une unité de commande (50 ; 550) configurée pour commander au moins l'unité de fourniture de liquide de lavage et l'unité de rejet de déchet liquide, dans lequel
l'unité de commande effectue un troisième lavage durant lequel le premier chemin d'écoulement et le quatrième chemin d'écoulement sont fermés, le liquide de lavage est fourni du troisième chemin d'écoulement à la chambre de liquide à travers l'espace étanche, et le déchet liquide dans la chambre de liquide est rejeté du deuxième chemin d'écoulement.

8. Dispositif de formation de gouttelettes de liquide selon l'une quelconque des revendications 3 à 7, comprenant en outre :
une unité de commande (50 ; 550) configurée pour commander au moins l'unité de fourniture de liquide de lavage et l'unité de rejet de déchet liquide, dans lequel
l'unité de commande effectue un quatrième lavage durant lequel le quatrième chemin d'écoulement est fermé, le liquide de lavage est fourni d'un chemin d'écoulement parmi le premier chemin d'écoulement et le deuxième chemin d'écoulement à la chambre de liquide, et le déchet liquide dans la chambre de liquide est rejeté de l'autre chemin d'écoulement parmi le premier chemin d'écoulement et le deuxième chemin d'écoulement.

9. Dispositif de formation de gouttelettes de liquide selon la revendication 8, dans lequel l'unité de fourniture de liquide de lavage inclut :
une première unité de fourniture qui fournit le liquide de lavage, et
une deuxième unité de fourniture qui fournit le liquide de lavage à une pression supérieure à celle de la première unité de lavage, et
durant le quatrième lavage, le liquide de lavage est fourni de la deuxième unité de fourniture au troisième chemin d'écoulement, et le liquide de lavage est fourni de la première unité de fourniture à un chemin d'écoulement parmi le premier chemin d'écoulement et le deuxième chemin d'écoulement.

10. Dispositif de formation de gouttelettes de liquide selon l'une quelconque des revendications 3 à 9, dans lequel
l'unité de fourniture de liquide de lavage et une unité de fourniture de matière première liquide (19) qui fournit la matière première liquide sont reliées au premier chemin d'écoulement pour être permutables.

11. Dispositif de formation de gouttelettes de liquide selon l'une quelconque des revendications 1 à 10, dans lequel l'unité d'évacuation comprend :
une tête d'évacuation (100 ; 600) comportant la chambre de liquide et le trou d'évacuation ; et
un corps principal d'unité d'évacuation (110 ; 610) auquel est reliée la tête d'évacuation, dans lequel
la tête d'évacuation et le corps principal d'unité d'évacuation sont configurés pour être attachés et détachés.

12. Dispositif de formation de gouttelettes de liquide selon la revendication 11, dans lequel la tête d'évacuation inclut :
un corps principal de tête (101 ; 601) doté de la chambre de liquide, et
une plate d'ajutage (102 ; 602) qui fait partie d'une surface de paroi de la chambre de liquide et comporte le trou d'évacuation, et
la tête d'évacuation peut être démontée en le corps principal de tête et la plaque d'ajutage.

13. Dispositif de formation de gouttelettes de liquide selon la revendication 11 ou la revendication 12, dans lequel le corps principal d'unité d'évacuation comporte une unité de vibration (15) qui applique une vibration à la matière première liquide stockée dans la chambre de liquide.

14. Dispositif de formation de gouttelettes de liquide selon la revendication 13, dans lequel l'unité de vibration inclut :
un vibrateur (151) qui génère une vibration, et
un moyen d'amplification (152) qui est relié au vibrateur et qui amplifie la vibration.

15. Dispositif de fabrication de particules fines (500), comprenant :
le dispositif de formation de gouttelettes de liquide (1 ; 2) selon l'une quelconque des revendications 1 à 14 ; et
un moyen de solidification configuré pour solidifier des gouttelettes de liquide évacuées par le dispositif de formation de gouttelettes de liquide.
